(19) 

**Europäisches Patentamt**
**European Patent Office**
**Office européen des brevets**

(11) **EP 4 593 492 A1**

(12) **EUROPEAN PATENT APPLICATION**
published in accordance with Art. 153(4) EPC

(43) Date of publication:
**30.07.2025 Bulletin 2025/31**

(21) Application number: **24741242.2**

(22) Date of filing: **09.01.2024**

(51) International Patent Classification (IPC):
**H04W 72/0446** (2023.01)

(86) International application number:
**PCT/CN2024/071342**

(87) International publication number:
**WO 2024/149244 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023 CN 202310039506**

(71) Applicant: **ZTE Corporation
Shenzhen, Guangdong 518057 (CN)**

(72) Inventors:
- **MIAO, Ting**
  **Shenzhen, Guangdong 518057 (CN)**
- **LU, Youxiong**
  **Shenzhen, Guangdong 518057 (CN)**
- **XING, Weimin**
  **Shenzhen, Guangdong 518057 (CN)**
- **CHEN, Jie**
  **Shenzhen, Guangdong 518057 (CN)**
- **HE, Haigang**
  **Shenzhen, Guangdong 518057 (CN)**

(74) Representative: **Aipex B.V.
Vestdijk 51
5611 CA Eindhoven (NL)**

(54) **FEEDBACK CHANNEL MAPPING METHOD, ELECTRONIC DEVICE AND STORAGE MEDIUM**

(57) Provided are a feedback channel mapping method, an electronic device and a storage medium. The feedback channel mapping method includes the following: For each resource block set in a resource pool, a physical sidelink feedback channel, PSFCH, resource set in the resource block set and a sub-channel corresponding to a PSFCH resource in the resource block set are determined. For each resource block set, PSFCH resources in the PSFCH resource set are grouped based on the number of sub-channels corresponding to the PSFCH resources in the PSFCH resource set and the number or maximum number of physical sidelink shared channel, PSSCH, slots associated with a PSFCH slot, and divided PSFCH resource groups are allocated to each PSSCH slot in the PSSCH slots associated with the PSFCH slot and to each sub-channel in the sub-channels.

For each resource block set in a resource pool, determine a PSFCH resource set in the resource block set and a sub-channel corresponding to a PSFCH resource in the resource block set — S110

For each resource block set, group PSFCH resources in the PSFCH resource set based on the number of sub-channels and the number or maximum number of PSSCH slots associated with a PSFCH slot, and allocate divided PSFCH resource groups to each PSSCH slot in the PSSCH slots associated with the PSFCH slot and to each sub-channel in the sub-channels — S120

**FIG. 1**

## Description

TECHNICAL FIELD

The present application relates to the field of wireless communication technology, for example, a feedback channel mapping method, an electronic device and a storage medium.

BACKGROUND

For sidelink (SL) communication in an unlicensed spectrum band, before sending data over a channel on the unlicensed spectrum, a user equipment (UE) needs to perform a channel access procedure to monitor whether the channel is idle. The channel access procedure follows the principle of "Listen Before Talk" (LBT), that is, LBT needs to be performed first. Only when the LBT successfully confirms that the channel is idle can the user equipment transmit data using the channel. If the LBT fails (that is, the channel is busy), the user equipment is not allowed to transmit data via the channel. For sidelink communication in an unlicensed spectrum band, the availability of a channel is uncertain. A channel refers to a carrier or a part of a carrier. For example, a part of a carrier consists of a group of contiguous resource blocks (RBs). A user equipment that successfully performs LBT can occupy the channel for a certain period, which is referred to as the channel occupied time (COT). The time-frequency resources of a certain frequency domain width within the COT are considered resources that are obtained based on the LBT monitoring mechanism and allowed to be used by the UE. On the other hand, if the LBT fails, the user equipment cannot use the relevant channel in the unlicensed spectrum to transmit information. The time-frequency resources of a certain frequency domain width within the COT may be used by the user equipment that successfully performs LBT. Alternatively, the UE that successfully performs LBT may initiate COT sharing and share the acquired COT with other user equipments. Other user equipments can use the time-frequency resources of a certain frequency domain width within the shared COT.

To meet regulatory requirements in some countries and regions for the unlicensed spectrum, such as meeting the required channel occupied bandwidth, the new radio in unlicensed spectrum (NR-U) system defines the interlace. An interlace is composed of equally spaced common resource blocks (CRBs). For example, interlace $m \in \{0, 1, ..., M-1\}$ is composed of CRBs $\{m, M+m, 2M+m, 3M+m, ...\}$, where M is the number of interlaces. Generally, the value of M varies for different subcarrier spacings. For example, M of 10 corresponds to the subcarrier spacing of 15 kHz, and M of 5 corresponds to the subcarrier spacing of 30 kHz.

For SL communication in an unlicensed spectrum band, a resource pool may contain multiple resource block sets (RB sets). Typically, each RB set consists of one or more contiguous RBs in the frequency domain. Usually, a guard band is left between adjacent RB sets to avoid interference between transmissions in different RB sets. For SL transmission based on the interlace, the interlace concept from NR-U can be applied. According to the mapping rules between the physical sidelink shared channel (PSSCH) and the physical sidelink feedback channel (PSFCH) in NR SL systems, the PSFCH corresponding to a PSSCH typically resides within one RB set. However, due to the uncertain availability of RB sets in the unlicensed spectrum band, if the receiving terminal of the PSSCH cannot transmit the PSFCH due to LBT failure before the PSFCH transmission, the sending terminal of the PSSCH needs to retransmit the PSSCH. This situation significantly reduces spectrum efficiency and increases latency and transmission overhead. In the field of sidelink transmission, a problem exists where the PSFCH cannot be transmitted due to LBT failure.

SUMMARY

The main objective of the embodiments of the present application is to propose a feedback channel mapping method, an electronic device and a storage medium, and aim at reducing the probability of PSFCH transmission failure caused by LBT failure and the retransmission probability of the PSFCH, thereby improving spectrum efficiency and reducing latency and transmission overhead.

An embodiment of the present application provides a feedback channel mapping method. The method includes the following.

For each resource block set in a resource pool, a PSFCH resource set in the resource block set and a sub-channel corresponding to a PSFCH resource in the resource block set are determined. For each resource block set, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

An embodiment of the present application provides another feedback channel mapping method. The method includes the following.

For each resource block set group in a resource pool, a PSFCH resource set in the resource block set group and a sub-channel corresponding to a PSFCH resource in the resource block set group are determined. For each resource block set group, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

An embodiment of the present application also provides an electronic device.

The electronic device includes one or more processors and a memory. The memory is configured to store one or more programs. When executed by the one or more processors, the one or more programs cause the one or more processors to perform the feedback channel mapping method as described in any of the embodiments of the present application.

An embodiment of the present application also provides a computer-readable storage medium. The computer-readable storage medium stores one or more programs that, when executed by one or more processors, perform the feedback channel mapping method as described in any of the embodiments of the present application.

BRIEF DESCRIPTION OF DRAWINGS

FIG. 1 is a flowchart of a feedback channel mapping method according to an embodiment of the present application.

FIG. 2 is an example diagram of another feedback channel mapping method according to an embodiment of the present application.

FIG. 3 is an example diagram of another feedback channel mapping method according to an embodiment of the present application.

FIG. 4 is an example diagram of another feedback channel mapping method according to an embodiment of the present application.

FIG. 5 is an example diagram of another feedback channel mapping method according to an embodiment of the present application.

FIG. 6 is an example diagram of another feedback channel mapping method according to an embodiment of the present application.

FIG. 7 is an example diagram of another feedback channel mapping method according to an embodiment of the present application.

FIG. 8 is an example diagram of another feedback channel mapping method according to an embodiment of the present application.

FIG. 9 is a flowchart of another feedback channel mapping method according to an embodiment of the present application.

FIG. 10 is a diagram illustrating the structure of a feedback channel mapping apparatus according to an embodiment of the present application.

FIG. 11 is a diagram illustrating the structure of another feedback channel mapping apparatus according to an embodiment of the present application.

FIG. 12 is a diagram illustrating the structure of an electronic device according to an embodiment of the present application.

DETAILED DESCRIPTION

The embodiments described herein are only intended to explain the present application.

Suffixes such as "module", "component", or "unit" used for indicating elements in the subsequent description are used only for facilitating the description of the present application and have no particular meaning in themselves. Therefore, "module", "component", or "unit" may be used in a mixed manner.

In the new radio (NR) system, PSSCH transmissions support multiple transmission types (Case Types), including unicast, multicast, and broadcast. Among these types, unicast and multicast support hybrid automatic repeat request (HARQ) feedback, enabling the receiving terminal to inform the sending terminal whether data is successfully received. Feedback information is typically transmitted via the PSFCH. A PSSCH transmission may be associated with a PSCCH. The PSSCH and the associated PSCCH may be transmitted within the same slot. The minimum resource allocation units for the PSSCH in the time domain and the frequency domain are the slot and sub-channel respectively. The PSCCH carries first-stage sidelink control information (SCI) associated with the PSSCH while second-stage SCI is carried in the PSSCH.

For SL communication in a licensed spectrum band, 3GPP Releases 16 and 17 support implicit determination of the time-domain, frequency-domain, and code-domain resources of the PSFCH corresponding to a PSSCH. In the time domain, PSFCH resources are periodically configured in a resource pool, with the first period starting at the first slot of the resource pool. When a UE receives a PSSCH over slot n and the SCI of the PSSCH indicates that the receiving UE needs to perform HARQ feedback, the UE needs to send the PSFCH over the first slot containing the PSFCH resource, where the first slot is at least K slots after slot n in the resource pool corresponding to the reception. K may be understood as the minimum time interval between the slot where the PSSCH is located and the slots where the PSFCH corresponding to the PSSCH is located. K is counted in slots in the resource pool and is typically provided via a higher-layer parameter (such as sl-MinTimeGapPSFCH).

In the frequency domain, one PSFCH resource corresponds to one RB. A higher-layer parameter configures $M_{PRB, set}^{PSFCH}$ resource blocks for the PSFCH within a resource pool. The UE divides the $M_{PRB, set}^{PSFCH}$ resource blocks into $N_{subch} \cdot N_{PSSCH}^{PSFCH}$ PSFCH resource block groups, and each PSFCH resource block group contains $M_{subch, slot}^{PSFCH}$ resource blocks, where $M_{subch, slot}^{PSFCH} = M_{PRB, set}^{PSFCH} / (N_{subch} \cdot N_{PSSCH}^{PSFCH})$. The $N_{subch}$ sub-channels in the resource pool and up to $N_{PSSCH}^{PSFCH}$ PSSCH slots associated with one PSFCH slot are sorted in ascending order of slots and then in ascending order of sub-channels. Each sub-channel in each PSSCH slot corresponds to a PSFCH resource block group. According to the preceding order, the $N_{subch} \cdot N_{PSSCH}^{PSFCH}$ PSFCH resource block groups are allocated to each sub-channel and each PSSCH slot associated with the PSFCH slot, that is, the $N_{subch} \cdot N_{PSSCH}^{PSFCH}$ PSFCH resource block groups are allocated to each sub-channel in each PSSCH slot associated with the PSFCH slot. $N_{subch}$ denotes the number of sub-channels within the resource pool bandwidth. $N_{PSSCH}^{PSFCH}$ denotes the number of PSSCH slots associated with a PSFCH slot. Typically, the resource blocks in a PSFCH resource block set are divided into PSFCH resource block groups in ascending order of the frequency domain.

Typically, a PSSCH transmission is contained over one slot and occupies at least one sub-channel in the frequency domain, and each sub-channel corresponds to $M_{subch, slot}^{PSFCH}$ PSFCH resource blocks. A candidate PSSCH resource set corresponding to a PSSCH is determined based on either all sub-channels or the starting sub-channel occupied by the PSSCH. PSFCH resources may be code division multiplexed. Finally, the number of PSFCH resources corresponding to one PSSCH may be expressed as

$$R_{PRB, CS}^{PSFCH} = N_{type}^{PSFCH} \cdot M_{subch, slot}^{PSFCH} \cdot N_{CS}^{PSFCH}.$$

If the selection type is configured to correspond only to the starting sub-channel of the PSSCH, $N_{type}^{PSFCH} = 1$, and $M_{subch, slot}^{PSFCH}$ PSFCH resource blocks are the PSFCH resource blocks corresponding to the starting sub-channel of the PSSCH.

If the selection type is configured to correspond to all sub-channels of the PSSCH, $N_{type}^{PSFCH} = N_{subch}^{PSSCH}$, and the $N_{subch}^{PSSCH} \cdot M_{subch, slot}^{PSFCH}$ resource blocks are the PSFCH resource blocks corresponding to the $N_{subch}^{PSSCH}$ sub-channels occupied by the PSSCH. $N_{CS}^{PSFCH}$ denotes the number of cyclic shift pairs configured in the resource pool.

The $R_{PRB, CS}^{PSFCH}$ PSFCH resources corresponding to a PSSCH transmission are numbered first in ascending order of resource block indices and then in ascending order of cyclic shift pair indices. The UE determines the PSFCH resource index corresponding to the PSSCH based on the physical layer source identifier (source ID) indicated by the sidelink control information and $M_{ID}$, that is, the UE determines a PSFCH resource from $R_{PRB, CS}^{PSFCH}$ PSFCH resources. $M_{ID}$ is 0 or the UE identifier indicated by a higher layer. Generally, $M_{ID}$ is related to the transmission type (Case Type) and the type of information carried by the PSFCH.

Additionally, the PSFCH may also transmit collision indication information. For example, UE B sends SL data to UE A and reserves future transmission resources; when UE A finds that the resources reserved by UE B overlap the resources reserved by other UEs, or due to half-duplex restrictions, UE A does not expect to receive data sent by UE B on the reserved resources, UE A may indicate to UE B that the reserved resources collide, that is, UE A may send collision indication information to UE B.

The slot where the PSFCH resource carrying the collision indication information is located may be determined by the slot where the SCI indicating the reserved resources is located. For example, if the UE receives the reserved resources indicated by the SCI in slot n and the reserved resources collide, the UE sends a PSFCH over the first slot containing the PSFCH resources after at least K slots from slot n, and the slot where the PSFCH is located is at least T3 slots before the reserved resources corresponding to the collision indication information. Alternatively, the slot where the PSFCH resource carrying the collision indication information is located is determined by the slot where the colliding reserved resource is located. For example, if the UE receives the reserved resources indicated by the SCI in slot n and the reserved resources collide, and the colliding reserved resource is in slot m, the UE sends the PSFCH over the nearest slot containing the PSFCH resources before at least T3 slots from slot m, and the slot where the PSFCH is located is at least K slots after slot n. K and T3 are counted in slots in the resource pool. K is typically configured via a higher-layer parameter (such as sl-MinTimeGapPSFCH). T3 is typically predefined and depends on the subcarrier spacing.

In the resource pool, the PSFCH resource period carrying the collision indication information is the same as the PSFCH resource period carrying HARQ information, and the configured PSFCH slots are usually the same. The $M_{PRB, set}^{PSFCH}$ resource blocks of the PSFCH for transmitting the collision indication information are configured through higher-layer parameters and do not overlap the frequency-domain resources of the PSFCH carrying HARQ feedback information.

In the frequency domain, the same manner of allocating $M_{PRB, set}^{PSFCH}$ resource blocks of the PSFCH for carrying the HARQ feedback information to the $N_{subch}$ sub-channels in the resource pool and the maximum $N_{PSSCH}^{PSFCH}$ PSSCH slots associated with the PSFCH slot is applied to the following: The $M_{PRB, set}^{PSFCH}$ resource blocks of the PSFCH for carrying the collision indication information are divided into $N_{subch} \cdot N_{PSSCH}^{PSFCH}$ PSFCH resource block groups. Each PSFCH resource block group contains $M_{subch, slot}^{PSFCH}$ resource blocks, and

$$M_{subch, slot}^{PSFCH} = M_{PRB, set}^{PSFCH} / \left( N_{subch} \cdot N_{PSSCH}^{PSFCH} \right).$$

These PSFCH resource block groups are allocated to $N_{subch}$ sub-channels in the resource pool and the maximum $N_{PSSCH}^{PSFCH}$ PSSCH slots associated with the PSFCH slot. Then, based on all the sub-channels or the starting sub-channel occupied by the PSSCH, the candidate PSSCH resource set corresponding to the PSSCH is determined. PSFCH resources may also be code division multiplexed. Finally, the number of candidate PSFCH resources corresponding to one PSSCH may be expressed as

$$R_{PRB, CS}^{PSFCH} = N_{type}^{PSFCH} \cdot M_{subch, slot}^{PSFCH} \cdot N_{CS}^{PSFCH}.$$ The PSSCH is the PSSCH over the slot where the SCI indicating the colliding reserved resources is located, or the PSSCH on the colliding reserved resources. Finally, the UE determines a PSFCH resource from $R_{PRB, CS}^{PSFCH}$ PSFCH resources corresponding to the PSSCH based on $M_{ID}$ and the source ID indicated by the SCI to transmit collision indication information.

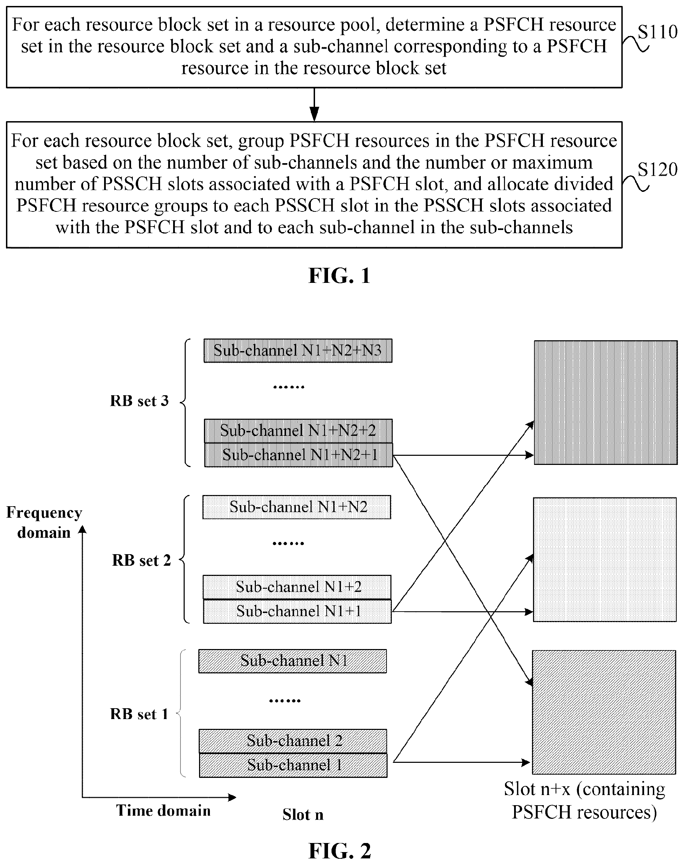

FIG. 1 is a flowchart of a feedback channel mapping method according to an embodiment of the present application. This embodiment of the present application may be applied to the case of determining a PSFCH resource allocated to each sub-channel in sidelink communication, thereby determining the resource used by the PSFCH carrying HARQ feedback information corresponding to the PSSCH or collision indication information. The method may be performed by a feedback channel mapping apparatus. The apparatus may be implemented in software and/or hardware. With reference to FIG. 1, the method provided by this embodiment of the present application includes S110 and S 120.

In S110, for each resource block set in a resource pool, a PSFCH resource set in the resource block set and a sub-channel corresponding to a PSFCH resource in the resource block set are determined.

In the embodiment of the present application, for each resource block set in the resource pool, a PSFCH resource set in each resource block set and a sub-channel corresponding to the PSFCH resource in each resource block set may be determined.

In some embodiments of the present application, the method for determining the PSFCH resource set in each RB set of the resource pool may include providing frequency-domain PSFCH resources in the RB set through configuration or pre-configuration. The PSFCH resource set in the RB set consists of the following: frequency-domain PSFCH resources configured, pre-configured, or predefined in the resource block set, or a combination of a frequency-domain PSFCH resource configured, pre-configured, or predefined in the resource block set and code-domain PSFCH resources configured, pre-configured, or predefined in the resource pool.

Exemplarily, an example where the frequency-domain PSFCH resources in each resource block set of the resource pool are determined is used. For each resource block set, a bitmap may be used for indicating PSFCH resources in a resource block set. That is, different bitmaps may indicate PSFCH resources in different RB sets. Alternatively, a single bitmap indicates PSFCH resources in the entire resource pool so that a PSFCH resource located in a resource block set is determined as the PSFCH resource of the resource block set. In the embodiments of the present application, each PSFCH resource occupies at least one resource block. In other embodiments of the present application, each resource block indicated by the bitmap is a PSFCH resource. In other embodiments of the present application, a specific number of adjacent resource blocks in the resource blocks indicated by the bitmap may be used as a PSFCH resource, or a specific number of resource blocks with a specific interval in the resource blocks indicated by the bitmap may be used as a PSFCH resource. The specific number, specific interval, and other information are determined by configuration, pre-configuration, or pre-definition.

In some embodiments of the present application, one or more interlace indices may be used to indicate PSFCH resources in each resource block set in the resource pool. Alternatively, one or more interlace indices are used to indicate PSFCH resources in the resource pool so that PSFCH resources located in a resource block set are determined as the PSFCH resources of the corresponding resource block set. A PSFCH resource may be at least one of the following: each resource block in each interlace; a specific number of adjacent resource blocks in each interlace; a specific number of resource blocks with specific intervals in each interlace; or each interlace. The specific number, specific interval, and other information are determined by configuration, pre-configuration, or pre-definition.

In some embodiments of the present application, for each RB set in the resource pool, the PSFCH resource set in the RB set is composed of frequency-domain PSFCH resources in the RB set indicated by configuration, pre-configuration, or pre-definition, or is composed of frequency-domain PSFCH resources in the RB set indicated by configuration, pre-configuration, or pre-definition and code-domain PSFCH resources configured, pre-configured, or predefined in the resource pool. For example, F frequency-domain PSFCH resources and C code-domain resources (such as C cyclic shift pairs) are in the RB set. If the PSFCH resource set only contains frequency-domain PSFCH resources, there are F PSFCH resources in total. If the PSFCH resource set includes both the frequency-domain and the code-domain PSFCH resources, a combination of each frequency-domain and PSFCH resource and each code-domain PSFCH resource forms one PSFCH resource in the PSFCH resource set. Therefore, the total number of PSFCH resources included in the PSFCH resource set is the product of the number of frequency-domain PSFCH resources and the number of code-domain PSFCH resources, that is, F*C PSFCH resources in total. In other words, the PSFCH resource set may be understood as a set of frequency-domain PSFCH resources or a set of frequency-domain PSFCH resources and code-domain PSFCH resources. Additionally, the method of indicating the frequency-domain PSFCH resources in the RB set through configuration, pre-configuration, or pre-definition is the same as described in the above embodiments of the application and is not repeated here.

In some embodiments of the present application, for an RB set, the PSFCH resource sets over different PSFCH slots are the same. The PSFCH resources in the PSFCH resource set over PSFCH slots in each RB set are only allocated to the PSSCH slots associated with the PSFCH slot and the sub-channels corresponding to the PSFCH resources in the RB set, that is, the PSFCH resources are only allocated to the sub-channels corresponding to the PSFCH resources in the RB set over the PSSCH slots associated with the PSFCH slot.

In some embodiments of the present application, each PSFCH transmission may transmit the PSFCH carrying information only on the PSFCH resources; alternatively, each PSFCH transmission, in addition to transmitting the PSFCH carrying information on the PSFCH resources, may also transmit an occupancy signal on a common RB. The occupancy signal typically does not carry information. The common RB is a resource block used commonly by the PSFCH resources in the PSFCH resource set. That is, when any PSFCH resource in the PSFCH resource set transmits the PSFCH carrying information, occupancy information is transmitted on the same common RB, mainly to meet the bandwidth occupancy requirements for transmission on the unlicensed spectrum. The common RB may be a common interlace in the RB set, a certain number of RBs at the two ends of the RB set, or a specific number of RBs in the interlace containing the PSFCH resources in the RB set. The information carried by the PSFCH mainly includes HARQ feedback information or collision indication information.

In some embodiments of the present application, determining the sub-channel corresponding to the PSFCH resource in the resource block set includes at least one of the following: determining the sub-channel corresponding to the PSFCH resource in the resource block set through at least one of configuration, pre-configuration, or pre-definition; or determining a resource block set group in the resource pool, and using all sub-channels in the resource block set group containing the resource block set as the sub-channel corresponding to the PSFCH resource in the resource block set.

In some embodiments of the present application, for each resource block set in the resource pool, determining the sub-channel corresponding to the PSFCH resource in the resource block set is equivalent to determining which sub-channels the PSFCH resource in the resource block set may be allocated to. The above may also be understood as follows: For the PSFCH resource set in the resource block set, it is determined which sub-channels the PSFCH resources in the PSFCH resource set are allocated to. The method for determination may include configuration, pre-configuration, or definition. In some embodiments of the present application, PSFCH resources corresponding to each sub-channel in the resource pool are located in which resource block sets may be determined through configuration, pre-configuration, or pre-definition. In other words, for each sub-channel, it is determined PSFCH resources in which resource block sets may be allocated to that sub-channel, thereby determining the sub-channel corresponding to the PSFCH resource in each resource block set in the resource pool, that is, determining which sub-channels the PSFCH resources in each resource block set may be allocated to. In other embodiments of the present application, the resource block sets contained in the resource pool may be grouped. For each resource block set group (that is, each group of resource block sets), each sub-channel in the resource block set group has corresponding PSFCH resources in each resource block set in the resource block set group. Thus, it is determined that the PSFCH resources in each resource block set may be allocated to which sub-channels. That is, for each resource block set in the resource block set group, the sub-channels corresponding to the PSFCH resources in the resource block set are all sub-channels in the resource block set group. In other embodiments of the present application, the resource block sets contained in the resource pool may be grouped. For each resource block set group, each sub-channel in the resource block set group has corresponding PSFCH resources in each resource block set in the resource block set group, and also has corresponding PSFCH resources in at least one resource block set in at least one other resource block set group. Thus, it is determined that the PSFCH resources in each resource block set may be allocated to which sub-channels. That is, for each resource block set in the resource block set group, the sub-channels corresponding to the PSFCH resources in the resource block set include all sub-channels in the resource block set group and all sub-channels in at least one resource block set in at least one other resource block set group.

In S120, for each resource block set, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

In the embodiment of the present application, for each resource block set in the resource pool, the PSFCH resources in the PSFCH resource set over the PSFCH slot may be grouped based on the number of sub-channels and the number or maximum number of PSSCH slots associated with the PSFCH slot, and the divided PSFCH resource groups are allocated to each PSSCH slot associated with the PSFCH slot and each sub-channel in the sub-channels corresponding to the PSFCH resources in the resource block set determined in S110.

In an example embodiment, for a resource block set in the resource pool, a UE is provided with a PSFCH resource set, the PSFCH resources in this resource block set correspond to $N_2$ sub-channels, that is, the PSFCH resources in the PSFCH resource set of this resource block set need to be allocated to the $N_2$ sub-channels. Additionally, the number or maximum number of PSSCH slots associated with a PSFCH slot is $N_1$. The PSFCH resource set over the PSFCH slot contains $N_3$ PSFCH resources. Therefore, the $N_3$ PSFCH resources in the PSFCH resource set are sequentially divided into $N_1 \cdot N_2$ PSFCH resource groups, with each group containing $\dfrac{N_3}{N_1 \cdot N_2}$ PSFCH resources. The combinations of $N_2$ sub-channels and PSSCH slots associated with the PSFCH slot are ordered. In some embodiments, this ordering may include ordering in ascending order of slots first and then in ascending order of sub-channels. The $N_1 \cdot N_2$ PSFCH resource groups are sequentially allocated to a PSSCH slot $n_1$ associated with the PSFCH slot and a sub-channel $n_2$. That is, the $N_1 \cdot N_2$ PSFCH resource groups are sequentially allocated to the sub-channel $n_2$ in the PSSCH slot $n_1$ associated with the PSFCH slot,

where $0 \le n_1 < N_1$, and $0 \le n_2 < N_2$. Furthermore, if $\dfrac{N_3}{N_1 \cdot N_2}$ is not an integer, a floor operation may be applied. Allocating $N_1 \cdot N_2$ PSFCH resource groups sequentially to the PSSCH slot $n_1$ associated with the PSFCH slot and the sub-channel $n_2$ may also be understood as allocating $N_1 \cdot N_2$ PSFCH resource groups sequentially to the sub-channel $n_2$ over the PSSCH slot $n_1$ associated with the PSFCH slot. In other words, each resource unit composed of the PSSCH slot $n_1$ and the sub-channel $n_2$ is allocated a PSFCH resource. The UE may determine the PSFCH resources corresponding to the PSSCH based on the resource unit occupied by the PSSCH. Exemplarily, the PSFCH resources corresponding to the PSSCH can be understood as candidate PSFCH resources. That is, the UE needs to determine or select one PSFCH resource from the PSFCH resources corresponding to the PSSCH to send the PSFCH.

Additionally, when PSFCH resources in the PSFCH resource set are grouped, if the PSFCH resource set contains only frequency-domain PSFCH resources, the PSFCH resources may be sorted based on the frequency domain indices of the PSFCH resources; if the PSFCH resource set includes both the frequency-domain PSFCH resources and the code-domain PSFCH resources, the PSFCH resources may be sorted based on the frequency domain indices and the code domain indices of the PSFCH resources. For example, the PSFCH resources are sorted first by the frequency-domain indices and then by the code-domain indices. If a PSFCH resource occupies multiple resource blocks, the frequency-domain index of this PSFCH resource refers to the index of the first resource block in the PSFCH resource or the index of the interlace where the PSFCH resource is located.

The PSFCH resource allocation method in the above example embodiment is executed separately for each RB set in the resource pool. After the PSFCH resource allocation method for all RB sets is completed, all PSFCH resources corresponding to each sub-channel over each PSSCH slot may be obtained. Typically, for a PSFCH resource set over a PSFCH slot in a resource block set, a PSFCH resource group is allocated to a sub-channel over a PSSCH slot. Here, the PSSCH slot refers to a PSSCH slot associated with the PSFCH slot, and the sub-channel refers to a sub-channel corresponding to the PSFCH resources in the resource set.

A PSFCH resource is located in one slot in the time domain, and the occupied symbol position is determined through configuration, pre-configuration, or pre-definition. When the PSFCH carries different information, the method for determining PSSCH slots associated with the PSFCH slot may differ, and the PSFCH resource set in the RB set may also differ. Typically, different PSFCH resource sets are required to be orthogonal in the frequency domain. Methods for determining the association between a PSFCH slot and a PSSCH slot may follow the existing mechanisms. For example, in the case where the PSFCH carries the HARQ feedback information, when the UE receives a PSSCH over slot n and the SCI of the PSSCH indicates that the receiving UE needs to perform HARQ feedback, the UE needs to send the PSFCH over the first slot containing PSFCH resources after at least K slots from slot n in the resource pool corresponding to the reception. K may be understood as the minimum time interval between the slot where the PSSCH is located and the slots where the PSFCH corresponding to the PSSCH is located. K is counted in slots in the resource pool. For example, in the case where the PSFCH carries the collision indication information, the slot where the PSFCH resource carrying the collision indication information is located may be determined by the slot where the SCI indicating the reserved resources is located. For example, if the UE receives the reserved resources indicated by the SCI over slot n and the reserved resources collide, the UE sends the PSFCH over the first slot containing the PSFCH resources after at least K slots from slot n, and the slot where the PSFCH is located is at least T3 slots before the reserved resources (that is, the colliding reserved resources) corresponding to the collision indication information. Otherwise, (that is, the slot where the PSFCH is located does not meet any of the two time intervals K and T3), the UE does not send the PSFCH carrying the collision indication information. Alternatively, the slot where the PSFCH resource carrying the collision indication information is located is determined by the slot where the colliding reserved resource is located. For example, if the UE receives the reserved resources indicated by the SCI over slot n and the reserved resources collide, and the colliding reserved resource is in slot m, the UE sends the PSFCH in the nearest slot containing the PSFCH resources before at least T3 slots from slot m, and the slot where the PSFCH is located is at least K slots after slot n. Otherwise, the UE does not send the PSFCH carrying the collision indication information. K and T3 are counted in slots in the resource pool. K is typically configured via a higher-layer parameter (such as sl-MinTimeGapPSFCH). T3 is typically configured via a higher-layer parameter or a predefined method, and the value of T3 may be related to the subcarrier spacing.

In the embodiments of the present application, at least one PSFCH resource group is allocated to each sub-channel, and each PSFCH resource group belongs to one resource block set.

Based on the above embodiments of the present application, different PSFCH resource groups allocated to each sub-channel belong to different resource block sets. Exemplarily, if a sub-channel has corresponding PSFCH resources in M RB sets, M PSFCH resource groups are allocated to the sub-channel, where the M PSFCH resource groups belong to the M RB sets, respectively.

For example, a resource pool contains three RB sets, that is, RB set 1, RB set 2, and RB set 3. A PSFCH resource set in each RB set is determined as PSFCH resource set 1, PSFCH resource set 2, and PSFCH resource set 3. Sub-channels in RB set 1 have corresponding PSFCH resources in RB sets 1 and 2 (that is, PSFCH resources in RB sets 1 and 2 are allocated to sub-channels in RB set 1). Sub-channels in RB set 2 have corresponding PSFCH resources in RB sets 2 and 3. Sub-channels in RB set 3 have corresponding PSFCH resources in RB sets 1 and 3. Thus, each sub-channel over each PSSCH slot in RB set 1 is allocated one PSFCH resource group from PSFCH resource set 1 and one PSFCH resource group from PSFCH resource set 2. Each sub-channel over each PSSCH slot in RB set 2 is allocated one PSFCH resource group from PSFCH resource set 2 and one PSFCH resource group from PSFCH resource set 3. Each sub-channel over each PSSCH slot in RB set 3 is allocated one PSFCH resource group from PSFCH resource set 1 and one PSFCH resource group from PSFCH resource set 3.

In some embodiments of the present application, a UE is configured or pre-configured with PSFCH slots. Alternatively, a UE is configured or pre-configured with PSFCH slots, and a UE initiating a COT dynamically indicates PSFCH slots within the COT from the configured/pre-configured slots during the COT. Alternatively, the UE initiating a COT directly dynamically indicates PSFCH slots within the COT during the COT. A PSFCH slot refers to a slot containing the PSFCH resources.

In some embodiments of the present application, a sub-channel has corresponding PSFCH resources in each resource block set of at least one resource block set.

In the embodiment of the present application, some sub-channels in the resource pool may have corresponding PSFCH resources in each resource block set of at least one resource block set. Other sub-channels may have corresponding PSFCH resources in each resource block set of at least two resource block sets. In other embodiments of the present application, all sub-channels in the resource pool may have corresponding PSFCH resources in each resource block set of at least two resource block sets.

In other embodiments of the present application, each sub-channel in the resource pool has corresponding PSFCH resources in each RB set of M RB sets.

Based on the above embodiments of the present application, the PSFCH resource set in each RB set of the resource pool is divided into M PSFCH resource subsets, and each sub-channel corresponds to different PSFCH resource subsets in the M RB sets.

Based on the above embodiments of the present application, the PSFCH resources in the PSFCH resource subset in each RB set are allocated to each PSSCH slot in the PSSCH slots associated with the PSFCH slot and to each sub-channel corresponding to the PSFCH resource subset. That is, the PSFCH resources in the PSFCH resource subset in each RB set may be allocated to each sub-channel corresponding to the PSFCH resource subset over each PSSCH slot in the PSSCH slots associated with the PSFCH slot.

For example, a resource pool includes 3 RB sets, M = 2, and one PSFCH slot is associated with 4 PSSCH slots. A sub-channel in RB set 1 has corresponding PSFCH resources in RB set 1 and RB set 2. A sub-channel in RB set 2 has corresponding PSFCH resources in RB set 2 and RB set 3. A sub-channel in RB set 3 has corresponding PSFCH resources in RB set 3 and RB set 1. The PSFCH resource set in each RB set is divided into two subsets. It is assumed that the sub-channel in RB set 1 corresponds to the first PSFCH resource subset in RB set 1 and the second PSFCH resource subset in RB set 2; the sub-channel in RB set 2 corresponds to the first PSFCH resource subset in RB set 2 and the second PSFCH resource subset in RB set 3; and the sub-channel in RB set 3 corresponds to the first PSFCH resource subset in RB set 3 and the second PSFCH resource subset in RB set 1.

Thus, the first and second PSFCH resource subsets in RB set 1 are allocated to the sub-channels in RB set 1 and RB set 3 over the four PSSCH slots associated with the PSFCH slot, the first and second PSFCH resource subsets in RB set 2 are allocated to the sub-channels in RB set 2 and RB set 1 over the four PSSCH slots associated with the PSFCH slot, and the first and second PSFCH resource subsets in RB set 3 are allocated to the sub-channels in RB set 3 and RB set 2 over the four PSSCH slots associated with the PSFCH slot. Typically, for a PSFCH resource subset of a PSFCH slot, each sub-channel over each PSSCH slot associated with the PSFCH slot is allocated a PSFCH resource group.

Based on the above embodiments of the present application, the PSFCH resources in each RB set in the resource pool correspond to the sub-channels in M RB sets.

Based on the above embodiments of the present application, when a sub-channel is across multiple RB sets, the PSFCH resources in each RB set in the resource pool correspond to sub-channels in M RB set groups. In this case, the multiple RB sets spanned by the sub-channel are considered as one RB set group. For example, if the resource pool includes four RB sets and every two RB sets are interlaced to form one sub-channel, every two RB sets are considered one RB set group.

In an embodiment of the present application, the PSFCH resources in the PSFCH resource set are frequency-domain PSFCH resources and code-domain PSFCH resources. The number of PSFCH resources corresponding to the PSSCH is the number of PSFCH resources allocated to the starting sub-channel occupied by the PSSCH. Alternatively, the number of PSFCH resources corresponding to the PSSCH is the total number of PSFCH resources allocated to all sub-channels occupied by the PSSCH.

In the embodiment of the present application, the PSFCH resource set may include frequency-domain PSFCH resources and code-domain PSFCH resources.

The number of PSFCH resources associated with the PSSCH may be determined by the number of PSFCH resources allocated to all sub-channels occupied by the PSSCH, that is, the sum of the number of PSFCH resources allocated to each sub-channel in all sub-channels occupied by the PSSCH.

The embodiment of the present application may also be understood as follows: The PSFCH resources in the PSFCH resource set are the frequency-domain PSFCH resources and code-domain PSFCH resources. The PSFCH resources corresponding to the PSSCH are the PSFCH resources allocated to the starting sub-channel occupied by the PSSCH. Alternatively, the PSFCH resources corresponding to the PSSCH are the PSFCH resources allocated to all sub-channels occupied by the PSSCH.

In another embodiment of the present application, the PSFCH resources in the PSFCH resource set are frequency-domain PSFCH resources, and the number of PSFCH resources corresponding to the PSSCH includes at least one of the following: the product of the number of PSFCH resources allocated to the starting sub-channel occupied by the PSSCH and the number of code-domain PSFCH resources; the product of the number of PSFCH resources allocated to all sub-channels occupied by the PSSCH and the number of code-domain PSFCH resources; the number of PSFCH resources allocated to the starting sub-channel occupied by the PSSCH; and the number of PSFCH resources allocated to all sub-channels occupied by the PSSCH.

In this embodiment of the present application, the PSFCH resources in the PSFCH resource set include only frequency-domain PSFCH resources. The number of PSFCH resources corresponding to a PSSCH is the product of the number of PSFCH resources allocated to the starting sub-channel occupied by the PSSCH and the number of code-domain PSFCH resources. Alternatively, the number of PSFCH resources corresponding to a PSSCH is the product of the sum of the number of PSFCH resources allocated to each sub-channel in all sub-channels occupied by the PSSCH and the number of code-domain PSFCH resources. Alternatively, the number of PSFCH resources corresponding to a PSSCH is the number of PSFCH resources allocated to the starting sub-channel occupied by the PSSCH. Alternatively, the number of PSFCH resources corresponding to a PSSCH is the sum of the number of PSFCH resources allocated to each sub-channel in all sub-channels occupied by the PSSCH.

This embodiment of the present application may also be understood as follows: The PSFCH resources in the PSFCH resource set are frequency-domain PSFCH resources. The PSFCH resources corresponding to a PSSCH include at least one of the following: the PSFCH resources allocated to the starting sub-channel occupied by the PSSCH and the code-domain PSFCH resources; the PSFCH resources allocated to all sub-channels occupied by the PSSCH and the code-domain PSFCH resources; the PSFCH resources allocated to the starting sub-channel occupied by the PSSCH; and the PSFCH resources allocated to all sub-channels occupied by the PSSCH.

In an embodiment of the present application, the PSFCH resources in the PSFCH resource set are frequency-domain PSFCH resources and code-domain PSFCH resources. For each resource block set in the resource pool, the number of PSFCH resources corresponding to a PSSCH in the resource block set is the number of PSFCH resources allocated to the starting sub-channel occupied by the PSSCH in the resource block set, or the number of PSFCH resources corresponding to a PSSCH in a resource block set is the number of PSFCH resources allocated to the sub-channels corresponding to the PSFCH resources in the resource block set among all sub-channels occupied by the PSSCH.

The embodiment of the present application may also be understood as follows: The PSFCH resources in the PSFCH resource set are frequency-domain PSFCH resources and code-domain PSFCH resources. For each resource block set in the resource pool, the PSFCH resources corresponding to a PSSCH in one resource block set are the PSFCH resources allocated to the starting sub-channel occupied by the PSSCH in the resource block set, or the PSFCH resources corresponding to a PSSCH in one resource block set are the PSFCH resources allocated to the sub-channels corresponding to the PSFCH resources in the resource block set among all sub-channels occupied by the PSSCH.

In another embodiment of the present application, the PSFCH resources in the PSFCH resource set are frequency-domain PSFCH resources. For each resource block set in the resource pool, the number of PSFCH resources corresponding to a PSSCH in the resource block set includes at least one of the following: the product of the number of PSFCH resources allocated to the starting sub-channel occupied by the PSSCH in the resource block set and the number of code-domain PSFCH resources; the product of the number of PSFCH resources allocated to the sub-channels corresponding to the PSFCH resources in the resource block set among all sub-channels occupied by the PSSCH and the number of code-domain PSFCH resources; the number of PSFCH resources allocated to the starting sub-channel occupied by the PSSCH in the resource block set; and the number of PSFCH resources allocated to the sub-channels corresponding to the PSFCH resources in the resource block set among all sub-channels occupied by the PSSCH.

This embodiment of the present application may also be understood as follows: The PSFCH resources in the PSFCH resource set are frequency-domain PSFCH resources. For each resource block set in the resource pool, the PSFCH resources corresponding to a PSSCH in a resource block set include at least one of the following: PSFCH resources allocated to the starting sub-channel occupied by the PSSCH in the resource block set and the code-domain PSFCH resources; PSFCH resources allocated to the sub-channels corresponding to the PSFCH resources in the resource block set among all sub-channels occupied by the PSSCH and code-domain PSFCH resources; PSFCH resources allocated to the starting sub-channel occupied by the PSSCH in the resource block set; and PSFCH resources allocated to the sub-channels corresponding to the PSFCH resources in the resource block set among all sub-channels occupied by the PSSCH.

The number of PSFCH resources corresponding to a PSSCH in a resource block set being 0 indicates the following: According to the correspondence between the PSFCH resources and sub-channels in a resource block set, the sub-channels corresponding to the PSFCH resources in the resource block set do not include the starting sub-channel occupied by the PSSCH; alternatively, according to the correspondence between the PSFCH resources and sub-channels in a resource block set, the sub-channels corresponding to the PSFCH resources in the resource block set do not include any of the sub-channels occupied by the PSSCH. It also means that the PSSCH has no PSFCH opportunity in the resource block set.

In some embodiments of the present application, the code-domain PSFCH resources are typically configured based on the resource pool. That is, code-domain PSFCH resources are configured or pre-configured for a resource pool.

In this embodiment of the present application, the PSFCH resources corresponding to a PSSCH are determined based on whether the PSSCH occupies the starting sub-channel or all sub-channels, as configured by a higher-layer parameter.

In some embodiments of the present application, the PSFCH resources corresponding to the PSSCH may be understood as candidate PSFCH resources. That is, the UE needs to determine or select one PSFCH resource from the PSFCH resources corresponding to the PSSCH to send the PSFCH.

In an embodiment of the present application, if the PSSCH corresponds to at least one PSFCH resource group in each resource block set in M resource block sets, the UE receiving the PSSCH determines a resource block set from the M resource block sets and sends the PSFCH on the PSFCH resource in the determined resource block set. M is an integer greater than 1.

In another embodiment of the present application, the UE sends a PSSCH. If the PSSCH corresponds to at least one PSFCH resource group in each resource block set of M resource block sets, the UE attempts to receive the PSFCH corresponding to the PSSCH on the PSFCH resources in the M resource block sets.

In an embodiment of the present application, a PSSCH corresponds to at least one PSFCH resource group in a resource block set, and the PSFCH resources in the union formed by the at least one PSFCH resource group are ordered according to a specific rule (that is, determining the indices of the PSFCH resources in the union). For example, the specific rule may be the frequency domain first followed by the code domain, the code domain first followed by the frequency domain, or ascending order in the frequency domain.

In an embodiment of the present application, the UE receiving a PSSCH determines the indices of PSFCH resources corresponding to the PSSCH in a resource block set based on the source ID indicated by the SCI and $M_{ID}$. That is, the UE determines a PSFCH resource in the union formed by the at least one PSFCH resource group in the determined resource block set based on the source ID indicated by the SCI and $M_{ID}$, to transmit the PSFCH. For example, the UE receives a PSSCH that requires HARQ feedback, and the UE determines to send the HARQ feedback on the PSFCH resources corresponding to the PSSCH in resource set X. Assuming that the PSSCH corresponds to ten PSFCH resources in resource block set X, the UE determines to use the PSFCH resource with the index $(Pid + M_{ID})$ mod 10 to send the PSFCH, where Pid denotes the source ID indicated by the SCI corresponding to the PSSCH, and $M_{ID}$ denotes the UE identifier indicated by a higher layer.

In some embodiments of the present application, at least one resource block set in the resource pool includes T PSFCH resource sets, and each sub-channel corresponds to different PSFCH resource sets over different PSFCH slots, where T is a positive integer.

In this embodiment of the present application, a resource block set is configured, pre-configured, or predefined with T PSFCH resource sets, and the determination of each PSFCH resource set refers to the method described in the above embodiments.

In this embodiment of the present application, at least one resource block set in the resource pool is configured, pre-configured, or predefined with one or more PSFCH resource sets, and each sub-channel may correspond to different PSFCH resource sets over different PSFCH slots.

In some embodiments of the present application, based on the preceding embodiments, for each resource block set including T PSFCH resource sets, the PSFCH resource set in the resource block set and the sub-channel corresponding to the PSFCH resource are determined for each PSFCH resource set in the T PSFCH resource sets; based on the number of sub-channels and the number or maximum number of PSSCH slots associated with a PSFCH slot, the PSFCH resource sets are grouped so that the divided PSFCH resource groups are allocated to each PSSCH slot associated with the PSFCH slot and each sub-channel in the sub-channels. The details are the same as the method described in the above embodiments, where PSFCH resources in the PSFCH resource set in each resource block set are allocated to each PSSCH slot associated with the PSFCH slot and each sub-channel in the sub-channels corresponding to the PSFCH resources in the resource block set. The details are not repeated here.

In other embodiments of the present application, a sub-channel corresponds to a PSFCH resource in at least one resource block set over each slot of the T PSFCH slots.

In the embodiment of the present application, a sub-channel has corresponding PSFCH resources in each RB set of the M RB sets over each slot of the T PSFCH slots.

In some embodiments, the association between the PSSCH slot and T PSFCH slots may include the following:

If the PSSCH is in slot n, a $t^{th}$ PSFCH slot among the T PSFCH slots corresponding to the PSSCH is a slot satisfying a specific condition that the slot is at least K slots after slot n. The specific condition may include factors determined by T and N, and K is the minimum time interval between the slot where the PSSCH is located and the slots where the PSFCH corresponding to the PSSCH is located. N is the PSFCH resource configuration period, or N is the number or maximum number of PSSCH slots associated with the PSFCH slot.

In some embodiments of the present application, each resource block set in the resource pool includes a PSFCH resource set. For T PSFCH resource sets corresponding to every T resource block sets, and each sub-channel corresponds to a different PSFCH resource set over different PSFCH slots, where T is a positive integer.

In the embodiments of the present application, a resource block set is configured, pre-configured, or predefined with a PSFCH resource set, and the method of determining the PSFCH resource set follows the method described in the above embodiments.

In some embodiments of the present application, PSFCH slots in the resource pool are grouped, and each sub-channel corresponds to at least one PSFCH resource over one PSFCH slot in each PSFCH slot group.

In this embodiment of the present application, the PSFCH slots in the resource pool may be grouped. In each PSFCH slot group, each sub-channel is allocated at least one PSFCH resource, and the at least one PSFCH resource is included in a PSFCH slot in each PSFCH slot group. Here, the sub-channel corresponds to a slot in the time domain.

In some embodiments of the present application, for some of the resource block sets in the resource pool, the PSFCH slots in the resource pool are grouped. This embodiment of the present application may also be understood as follows: The concept of the PSFCH slot group in the resource pool is only applicable to some of the resource block sets in the resource pool.

In an example embodiment, the PSFCH slots in the resource pool may be grouped at equal intervals. Each PSFCH slot group consists of PSFCH slots that are equally spaced. Each sub-channel corresponds to at least one PSFCH resource over one PSFCH slot in each PSFCH slot group.

In other embodiments of the present application, each sub-channel corresponds to PSFCH resources in at least one resource block set over one slot in each PSFCH slot group.

In the embodiments of the present application, each sub-channel has a corresponding PSFCH in M resource block sets over one slot of each PSFCH slot group in the resource pool, where M is an integer greater than or equal to 1. Here, the sub-channel corresponds to a slot in the time domain.

In some embodiments of the present application, for each PSFCH slot group, the association between a PSSCH slot and a PSFCH slot may include the following:

If a PSSCH is in slot n, the PSFCH slot corresponding to the PSSCH is the first PSFCH slot after at least K slots from slot n, where K is the minimum slot interval between the PSSCH slot and the PSFCH slot.

In some embodiments of the present application, PSFCH slots in the resource pool are grouped, and each sub-channel corresponds to at least one PSFCH resource over each PSFCH slot in a PSFCH slot group.

In the embodiments of the present application, the PSFCH slots in the resource pool are grouped, and each sub-channel corresponds to at least one PSFCH resource over each slot in one of the PSFCH slot groups, thus establishing a correspondence between the sub-channel and the PSFCH resources. Here, the sub-channel corresponds to a slot in the time domain.

In an example embodiment, the method for grouping PSFCH slots in the resource pool may include forming at least two adjacent PSFCH slots into a PSFCH slot group. Each sub-channel may correspond to at least one PSFCH resource over each PSFCH slot in a PSFCH slot group.

In some embodiments of the present application, a sub-channel corresponds to PSFCH resources in at least one resource block set over each slot of a PSFCH slot group.

In the embodiments of the present application, the sub-channel has corresponding PSFCH resources over each slot in a PSFCH slot group and has corresponding PSFCH resources in at least one resource block set over each slot, thereby achieving multiple PSFCH transmission opportunities of the sub-channel in the time domain and frequency domain. That is, a PSFCH transmission opportunity exists in at least one resource block set over each slot in a PSFCH slot group. Here, the sub-channel corresponds to a slot in the time domain.

In an example embodiment, each sub-channel has corresponding PSFCH resources in each RB set of the M RB sets over each slot of a PSFCH slot group in the resource pool.

In some embodiments of the present application, the association between a PSSCH slot and PSFCH slots may include the following: If a PSSCH is in slot n, the PSFCH slots corresponding to the PSSCH are all PSFCH slots in the first PSFCH slot group after at least K slots from slot n, where K is the minimum slot interval between the PSSCH slot and the PSFCH slots.

A PSSCH occupies one or more sub-channels in the frequency domain. Each sub-channel may have corresponding PSFCH resources in multiple RB sets. As long as one RB set among multiple RB sets succeeds in LBT, a PSFCH resource in the one RB set may be used for transmitting the PSFCH, thus increasing the transmission opportunities for the PSFCH corresponding to the PSSCH.

In an example embodiment, FIG. 2 is an example diagram of another feedback channel mapping method according to an embodiment of the present application. With reference to FIG. 2, each sub-channel has corresponding PSFCH resources in each RB set in an RB set group. For example, a sub-channel has corresponding PSFCH resources in each RB set in two RB sets, or the PSFCH resources in each RB set may be allocated to the sub-channels in the two RB sets.

In some embodiments of the present application, it is determined, through configuration, pre-configuration, or pre-definition, the corresponding PSFCH resources for each sub-channel on which RB sets in the resource pool. That is, the sub-channels corresponding to the PSFCH resources in each RB set in the resource pool are determined through configuration, pre-configuration, or pre-definition.

Each sub-channel corresponds to at least one PSFCH resource in each RB set of at least one RB set.

In an example embodiment, a resource pool includes three RB sets, that is, RB set 1, RB set 2, and RB set 3. The base station or network side may configure or pre-configure the following information for the UE:

Each sub-channel in RB set 1 has corresponding PSFCH resources in RB set 1 and RB set 2. Each sub-channel in RB set 2 has corresponding PSFCH resources in RB set 2 and RB set 3. Each sub-channel in RB set 3 has corresponding PSFCH resources in RB set 1 and RB set 3.

Based on the configured or pre-configured information, the UE may know the sub-channels corresponding to the PSFCH resources in each RB set. For example, a sub-channel corresponding to the PSFCH resources in RB set 1 is from the sub-channels in RB set 1 and RB set 3, a sub-channel corresponding to the PSFCH resources in RB set 2 is from the sub-channels in RB set 1 and RB set 2, and a sub-channel corresponding to the PSFCH resources in RB set 3 is from the sub-channels in RB set 2 and RB set 3.

In other example embodiments, the PSFCH resources in M RB sets corresponding to each sub-channel in each RB set in the resource pool may be determined through pre-definition, and the RB set indices corresponding to the M RB sets are implicitly obtained by the index of the RB set where the sub-channel is located. For example, the index of the RB set where the sub-channel is located is m, and assuming that the RB set indices start from 0, the indices of the M RB sets are m mod S, (m+Offset) mod S, (m+2·Offset) mod S, ..., (m + (M-1)·Offset) mod S. S denotes the total number of RB sets in the resource pool, mod denotes the modulo operation, and Offset denotes the index difference between adjacent RB sets in the M RB sets where the PSFCH resources corresponding to the sub-channel are located. The value of Offset may be configured, pre-configured, or predefined. Additionally, the value of M may also be configured, pre-configured, or predefined. If the RB set indices start from 1, the above formula is modified to (m-1) mod S+1, (m-1+Offset) mod S+1, (m-1+2·Offset) mod S+1, ..., (m-1+(M-1)·Offset) mod S+1. With reference to FIG. 2, FIG. 2 illustrates which RB sets contain the PSFCH resources corresponding to the first sub-channel in an RB set. The PSFCH resources corresponding to the other sub-channels in the RB set are located in the same RB set as the PSFCH resources corresponding to the first sub-channel in the RB set. In the figure, x denotes the time interval between the slot of the sub-channel and the slot containing the corresponding PSFCH resources, and x is usually counted in slots in the resource pool. Based on the mapping relationship shown in the figure, the sub-channels corresponding to the PSFCH resources in each RB set may be known. For example, the sub-channels corresponding to the PSFCH resources in RB set 1 are those in RB set 1 and RB set 3, with a total of N1+N3 sub-channels.

In another embodiment of the present application, the RB sets included in the resource pool are grouped, and each sub-channel in each RB set group has corresponding PSFCH resources in each RB set in the RB set group.

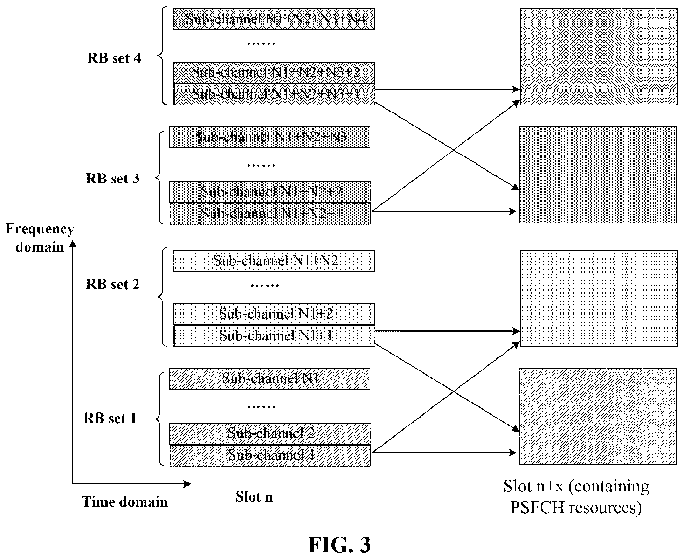

Exemplarily, a resource pool includes four RB sets, that is, RB set 1, RB set 2, RB set 3, and RB set 4. RB set 1 and RB set 2 form the first group, while RB set 3 and RB set 4 form the second group. For each sub-channel in the first group, the sub-channel corresponds to at least one PSFCH resource in RB set 1 and at least one PSFCH resource in RB set 2. For each sub-channel in the second group, the sub-channel corresponds to at least one PSFCH resource in RB set 3 and at least one PSFCH resource in RB set 4. With reference to Figure 3, FIG. 3 illustrates which RB sets contain PSFCH resources corresponding to the first sub-channel in an RB set. The PSFCH resources corresponding to the other sub-channels in the RB set are located in the same RB set as the PSFCH resources corresponding to the first sub-channel in the RB set. In the figure, x denotes the time interval between the slot of the sub-channel and the slot containing the corresponding PSFCH resources, and x is usually counted in slots in the resource pool. Based on the mapping relationship shown in the figure, the sub-channels corresponding to the PSFCH resources in each RB set may be known. For example, a sub-channel corresponding to the PSFCH resources in RB set 1 is from the sub-channels in RB set 1 and RB set 2, a sub-channel corresponding to the PSFCH resources in RB set 2 is from the sub-channels in RB set 1 and RB set 2, a sub-channel corresponding to the PSFCH resources in RB set 3 is from the sub-channels in RB set 3 and RB set 4, and a sub-channel corresponding to PSFCH resources in RB set 4 is also from the sub-channels in RB set 3 and RB set 4.

In another example embodiment, the RB sets in the resource pool are grouped, each sub-channel in each RB set group has corresponding PSFCH resources in each RB set in the RB set group and also has corresponding PSFCH resources in at least one RB set of at least one other RB set group.

Through this embodiment, the sub-channels corresponding to PSFCH resources in the RB set may be determined. The method for determining which RB sets in other RB set groups contain the PSFCH resources corresponding to a sub-channel may be determined through configuration, pre-configuration, or pre-definition.

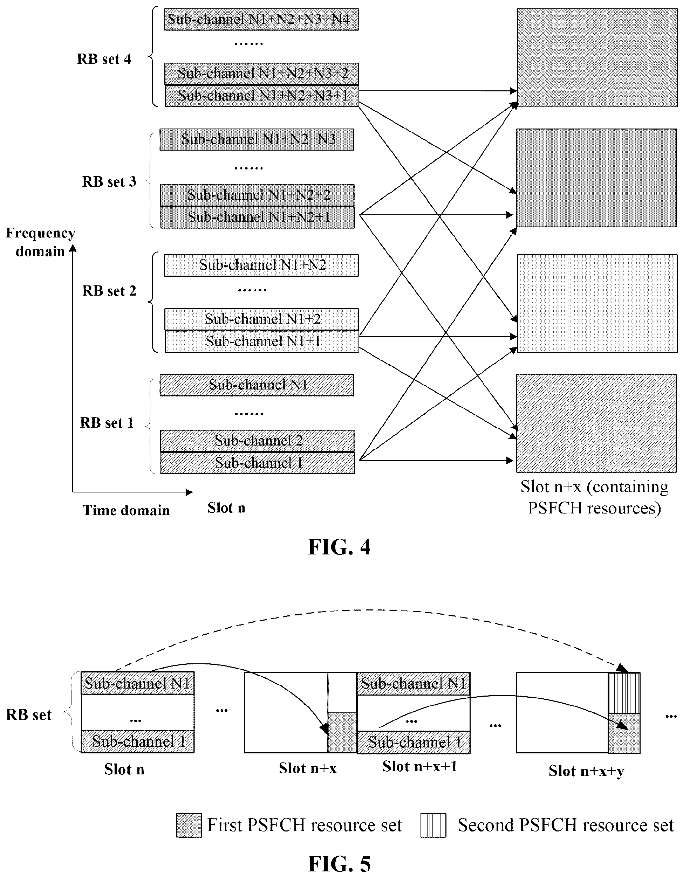

Exemplarily, with reference to FIG. 4, a resource pool includes four RB sets, that is, RB set 1, RB set 2, RB set 3, and RB set 4. RB set 1 and RB set 2 form the first group, while RB set 3 and RB set 4 form the second group. For each sub-channel in the first group, the sub-channel corresponds to at least one PSFCH resource in RB set 1 and at least one PSFCH resource in RB set 2. Additionally, a sub-channel in RB set 1 corresponds to at least one PSFCH resource in RB set 3, and a sub-channel in RB set 2 corresponds to at least one PSFCH resource in RB set 4. For each sub-channel in the second group, the sub-channel corresponds to at least one PSFCH resource in RB set 3 and at least one PSFCH resource in RB set 4. Additionally, a sub-channel in RB set 3 corresponds to at least one PSFCH resource in RB set 1, and a sub-channel in RB set 4 corresponds to at least one PSFCH resource in RB set 2. In other words, the sub-channels corresponding to the PSFCH resources in RB set 1 include sub-channels in RB sets 1, 2, and 3; the sub-channels corresponding to the PSFCH resources in RB set 2 include sub-channels in RB sets 1, 2, and 4; the sub-channels corresponding to the PSFCH resources in RB set 3 include sub-channels in RB sets 1, 3, and 4; and the sub-channels corresponding to the PSFCH resources in RB set 4 include sub-channels in RB sets 2, 3, and 4.

In some embodiments of the present application, RB sets contained in the resource pool are grouped through configuration, pre-configuration, or pre-definition. For example, the number of RB set groups in the resource pool and RB sets contained in each RB set group may be configured, pre-configured, or predefined. For another example, the number of RB set groups in the resource pool or the number of RB sets in each RB set group may be configured, pre-configured, or predefined, and combined with the total number of RB sets in the resource pool, the RB sets contained in each RB set group are determined. For another example, each RB set group may consist of one or more contiguous RB sets.

In some embodiments of the present application, the grouping method of RB sets in the resource pool is related to the number of RB sets contained in the resource pool. For example, when the resource pool contains less than three RB sets, no grouping is performed on the RB sets in the resource pool; when the resource pool contains three RB sets, the first two RB sets form one group and the last RB set forms another group; when the resource pool contains four RB sets, the first two RB sets form one group and the last two RB sets form another group; and so on.

Exemplarily, a resource pool contains S RB sets, and each RB set group contains K1 RB sets. If S mod K1 equals 0, every K1 RB sets form one RB set group. If S mod K1 is not 0, for the first S - K1 - (S mod K1) RB sets, every K1 RB sets form one group, and the remaining K1+(S mod K1) RB sets form one group. Here, mod denotes the modulo operation, K1 is an integer greater than 1, and the value of K1 is determined through configuration, pre-configuration, or pre-definition. K1 may also be 1, which is equivalent to no grouping of the RB sets.

In an example embodiment of the present application, T PSFCH resource sets are configured for each RB set among all or some RB sets in the resource pool, each sub-channel corresponds to different PSFCH resource sets over different PSFCH slots. For example, T PSFCH resource sets are configured for each RB set among M RB sets in the resource pool, and each sub-channel corresponds to at least one PSFCH resource in a $t^{th}$ PSFCH resource set over a $t^{th}$ slot among the T PSFCH slots, where t = 1, 2, ..., T. Here, the sub-channel may be from the M RB sets, where M is less than or equal to the total number of RB sets contained in the resource pool.

Based on the above embodiments of the present application, different PSFCH resource sets include different PSFCH resources.

Based on the above embodiments of the present application, the association between a PSSCH slot and T PSFCH slots corresponding to the PSSCH slot includes the following:

If the PSSCH is in slot n, a $t^{th}$ PSFCH slot among the T PSFCH slots corresponding to the PSSCH slot is a slot satisfying a specific condition that is at least K slots after slot n. The specific condition includes being determined by T and the PSFCH resource configuration period N. K is the minimum time interval between the slot where the PSSCH is located and the slots where the PSFCH corresponding to the PSSCH is located. K is counted in slots in the resource pool. For example, the specific condition is m mod (TN) = (t - 1)N, where N is the PSFCH resource configuration period. In this case, the $t^{th}$ PSFCH slot, among the T PSFCH slots corresponding to the PSSCH in slot n, is slot $t_m^{\prime SL}$ satisfying that m mod (T·N) = (t - 1)·N and is at least K slots after slot n.

$t_k^{\prime SL}$ $(0 \leq k < \mathrm{T}'_{\max})$ denotes a slot in the resource pool, and $\mathrm{T}'_{\max}$ denotes the number of slots in the resource pool.

In an example embodiment, with reference to FIG. 5, an RB set in a resource pool is configured with two PSFCH resource sets. Each sub-channel over slot n corresponds to at least one PSFCH resource in the first PSFCH resource set and at least one PSFCH resource in the second PSFCH resource set over PSFCH slot n+x (the slot containing the PSFCH resources, referred to as the PSFCH slot) and PSFCH slot n+x+y, respectively. Here, x denotes the time interval between the slot where the sub-channel is located and the slot where the first PSFCH resource set corresponding to the sub-channel is located, and x+y denotes the time interval between the slot where the sub-channel is located and the slot where the second PSFCH resource set corresponding to the sub-channel is located. Typically, x and y are counted in slots in the resource pool.

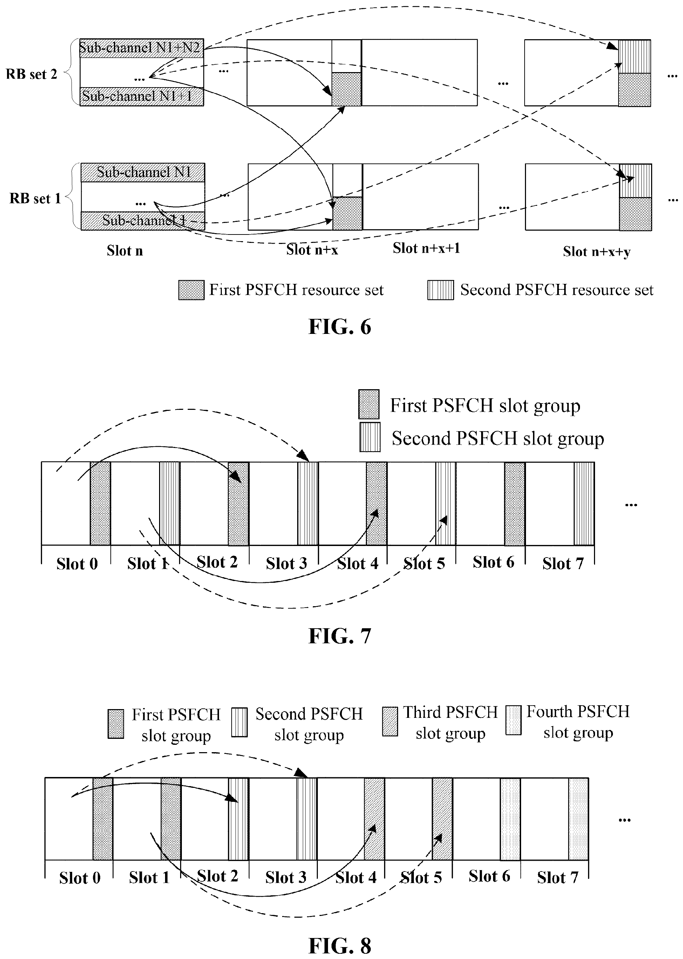

In another example embodiment, a sub-channel corresponds to at least one PSFCH resource in at least one RB set over each slot of T PSFCH slots. With reference to FIG. 6, RB set 1 and RB set 2 in the resource pool are configured with two PSFCH resource sets. Each sub-channel in RB set 1 over slot n corresponds to at least one PSFCH resource in each first PSFCH resource set of both RB set 1 and RB set 2 over PSFCH slot n+x, and each sub-channel in RB set 1 over slot n corresponds to at least one PSFCH resource in each second PSFCH resource set of both RB set 1 and RB set 2 over PSFCH slot n+x+y. Similarly, each sub-channel in RB set 2 over slot n corresponds to at least one PSFCH resource in each first PSFCH resource set of both RB set 1 and RB set 2 over PSFCH slot n+x, and each sub-channel in RB set 2 over slot n corresponds to at least one PSFCH resource in each second PSFCH resource set of both RB set 1 and RB set 2 in PSFCH slot n+x+y.

Based on the above embodiments of the present application, the number of PSFCH resource sets configured for each RB set or each RB set group in the resource pool may be the same or different.

In an example embodiment, PSFCH slots in the resource pool are grouped. Each PSFCH slot group consists of PSFCH slots that are equally spaced. Each sub-channel corresponds to at least one PSFCH resource over one PSFCH slot in each PSFCH slot group.

Exemplarily, for PSFCH slots in all or part of the RB sets in the resource pool, these PSFCH slots in the resource pool are grouped. Each PSFCH slot group consists of PSFCH slots that are equally spaced. Each sub-channel corresponds to at least one PSFCH resource over one PSFCH slot in each PSFCH slots group.

Based on the above embodiments of the present application, for each PSFCH slot group, the association between a PSSCH slot and PSFCH slots corresponding to the PSSCH slot includes the following:

If a PSSCH is in slot n, the PSFCH slot corresponding to the PSSCH is the first PSFCH slot after at least K slots from slot n, where K is the minimum slot interval between the PSSCH slot and the PSFCH slots. In some embodiments of the present application, K is counted in slots in the resource pool.

For example, when a UE receives a PSSCH over slot n and the SCI of the PSSCH indicates that the receiving UE needs to perform HARQ feedback, the UE needs to send the PSFCH over the first slot containing the PSFCH resources after at least K slots from slot n in the resource pool corresponding to the reception.

Based on the above embodiments of the present application, the configured or pre-configured value of K is applied to all PSFCH slot groups, or a value of K is set for each PSFCH slot group by configuration or configuration.

In an example embodiment, it is assumed that the PSFCH resource configuration period is N slots, and N is counted in slots in the resource pool. The slot k in the resource pool satisfying that k mod N = 0 is the PSFCH slot (it is assumed that k is the logical slot index in the resource pool, and the slots in the resource pool are numbered starting from 0, sequentially as 0, 1, ..., that is, k is the subscript in $t_k'^{SL}$ ). It is assumed that all PSFCH slots in the resource pool are divided into G groups. One grouping method is as follows: The slots satisfying that k mod(GN) = 0 are the first group, the slots satisfying that k mod(GN) = N are the second group, and so on, and the slots satisfying that k mod(GN) = (G - 1)N are the $G^{th}$ group. Based on the timing relationship between the slot where the sub-channel is located in the resource pool (that is, the PSSCH slot) and each PSFCH slot group, a sub-channel corresponds to a PSFCH resource set over one PSFCH slot, among each PSFCH slot group, that satisfies the timing relationship. With reference to FIG. 7, the PSFCH resource configuration period N is equal to 1, the PSFCH slots are divided into G (G = 2) groups, a slot k satisfying k mod 2 = 0 is the first PSFCH slot group, and a slot k satisfying k mod 2 = 1 is the second PSFCH slot group. Assuming that the minimum interval between the sub-channel and the PSFCH resources corresponding to the sub-channel in the first PSFCH slot group is two slots and the minimum interval between the sub-channel and the PSFCH resources corresponding to the sub-channel in the second PSFCH slot group is also two slots, the sub-channel over slot 0 in the resource pool separately corresponds to a PSFCH resource set over slot 2 and slot 3. Similarly, the sub-channel over slot 1 separately corresponds to a PSFCH resource set over slot 4 and slot 5.

In an embodiment, each sub-channel corresponds to at least one PSFCH resource in at least one RB set over one PSFCH slot in each PSFCH slot group.

In some embodiments of the present application, PSFCH slots in the resource pool are grouped, each PSFCH slot group consists of multiple adjacent PSFCH slots, and each sub-channel corresponds to at least one PSFCH resource over each PSFCH slot in one PSFCH slot group.

Exemplarily, for all RB sets in the resource pool or for some of the RB sets in the resource pool, the PSFCH slots in the resource pool are grouped. Each PSFCH slot group consists of multiple adjacent PSFCH slots. Each sub-channel corresponds to at least one PSFCH resource over each PSFCH slot in a PSFCH slot group.

In an embodiment, the association between a PSSCH slot and a PSFCH slot corresponding to the PSSCH slot includes the following:

The slot where the PSFCH resources corresponding to the PSSCH over slot n are located is in the first PSFCH slot group at least K slots after slot n. K is the minimum slot interval between the PSSCH slot and the PSFCH slot. Optionally, K is counted in slots in the resource pool. With reference to FIG. 8, the PSFCH slots in the resource pool are grouped into pairs. That is, the first and second PSFCH slots are grouped in one group, the third and fourth PSFCH slots are grouped in one group, and so on. It is assumed that the timing relationship that needs to be satisfied between the slot where the sub-channel is located (that is, the PSSCH slot) and the PSFCH slot corresponding to the PSSCH slot is as follows: The slot where the PSFCH resources corresponding to the sub-channel over slot n are located is in the first PSFCH slot group after at least two slots from slot n. Then, the slot where the PSFCH resources corresponding to the sub-channel over slot 0 are located is in the second PSFCH slot group, and the slot where the PSFCH resources corresponding to the sub-channel over slot 1 are located is in the third PSFCH slot group.

In this embodiment of the present application, each sub-channel corresponds to at least one PSFCH resource in at least one RB set over each PSFCH slot in a PSFCH slot group.

In the above embodiments, each sub-channel may be every sub-channel in the resource pool or every sub-channel in some of the RB sets in the resource pool. For example, some RB sets may be provided to the UE through configuration, pre-configuration, or pre-definition. Exemplarily, each sub-channel is every sub-channel in some RB sets of the resource pool. If the PSFCH slots in the resource pool are grouped for M RB sets in the resource pool, but no grouping is applied to the PSFCH slots for the other RB sets in the resource pool, then each sub-channel refers to a sub-channel in the M RB sets, where M is less than or equal to the total number of RB sets in the resource pool. In other words, the concept of the PSFCH slot group in the resource pool is only applicable to some of the RB sets in the resource pool.

In some embodiments of the present application, the PSSCH has transmission opportunities for the PSFCH in each of M resource block sets (that is, the PSSCH corresponds to at least one PSFCH resource set in each of the M resource block sets). The receiving UE of the PSSCH may determine using the PSFCH resource in which resource block set among the M resource block sets to transmit the PSFCH in at least one of the following manners:

1. One resource block set is randomly selected from all resource block sets succeeding in LBT. 2. The resource block set with the lowest index is selected from all resource block sets succeeding in LBT. 3. If N resource block sets succeeding in LBT include N' resource block sets occupied by the PSSCH, one resource block set is randomly selected from the N' resource block sets. 4. If N resource block sets succeeding in LBT include N' resource block sets occupied by the PSSCH, the resource block set with the lowest index is selected from the N' resource block sets. 5. LBT is not performed before PSFCH transmission, and the UE randomly selects a resource block set from M resource block sets. 6. LBT is not performed before PSFCH transmission, and the UE selects the resource block set with the lowest index from the M resource block sets. 7. If the UE succeeds in LBT in N resource block sets among the M resource block sets, the resource block set for sending the PSFCH is selected in the following priority order: (1) If the N resource block sets contain N' resource block sets occupied by the PSSCH, one is selected from the N' resource block sets for PSFCH transmission, where the selection method includes but is not limited to random selection and selecting one with the lowest index. (2) Otherwise, if at least one resource block set among the N resource block sets has a COT, one is selected from the at least one resource block set with the COT for PSFCH transmission. (3) Otherwise, one is selected from the resource block sets where LBT succeeds by using Type 1 channel access procedure for PSFCH transmission. 8. If the UE succeeds in LBT in N resource block sets among the M resource block sets, the resource block set is selected for PSFCH transmission according to the following priority order: (1) If at least one resource block set among the N resource block sets has a COT, one is selected from the at least one resource block set with the COT for PSFCH transmission. (2) Otherwise, if the N resource block sets contain N' resource block sets occupied by the PSSCH, one is selected from the N' resource block sets for PSFCH transmission, where the selection method includes but is not limited to random selection or selecting one with the lowest index. (3) Otherwise, one is selected from the resource block sets where LBT succeeds by using Type 1 channel access procedure for PSFCH transmission.

In the embodiments of the present application, the UE sends multiple PSFCHs in a resource block set over a PSFCH slot, and the channel access priority classes (CAPCs) of Type 1 channel access procedure corresponding to these multiple PSFCHs are different. If the UE successfully performs Type 1 channel access procedure according to the CAPC corresponding to one of the PSFCHs on the resource block set, all to-be-transmitted PSFCHs with CAPCs less than or equal to the CAPC corresponding to this PSFCH may be transmitted on the resource block set.

In another embodiment of the present application, the UE sends a PSSCH, and the PSSCH corresponds to a PSFCH resource in each resource block set in the M resource block sets. The UE attempts to receive the PSFCH corresponding to the PSSCH in the PSFCH resources in the M resource block sets.

In some embodiments, based on the above embodiments of the present application, for the M resource block sets, the UE decodes the PSFCH in the following descending order of priority: resource block sets occupied by the PSSCH; resource block sets having a COT; other resource block sets.

In some embodiments, based on the above embodiments of the present application, for M resource block sets, the UE decodes the PSFCH in the following descending order of priority: resource block sets having a COT; resource block sets occupied by the PSSCH; other resource block sets.

In some embodiments, based on the above embodiments of the present application, for the M resource block sets, the UE decodes the PSFCH in the following descending order of priority: resource block sets having a COT; other resource block sets.

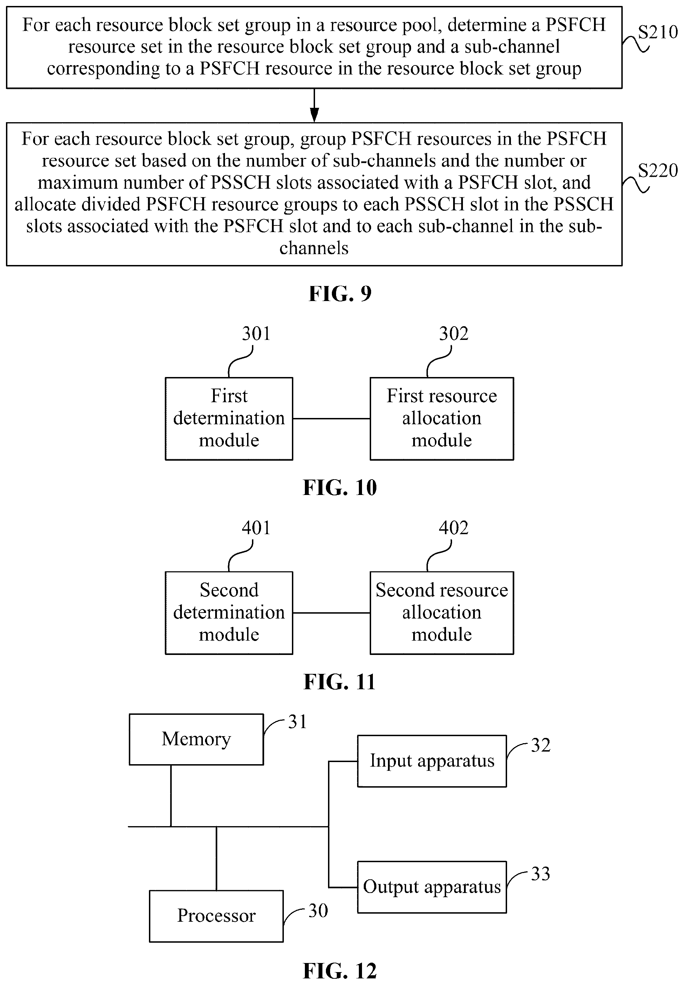

In some embodiments of the present application, a feedback channel mapping method may also be implemented based on resource block set groups. To keep the description concise, this embodiment primarily describes the differences from the above embodiments. For details not exhaustively covered in this embodiment, reference is made to the above embodiments, and no further description is given here. FIG. 9 is a flowchart of another feedback channel mapping method according to an embodiment of the present application. With reference to FIG. 9, the method provided by this embodiment of the present application includes S210 and S220.

In S210, for each resource block set group in a resource pool, a PSFCH resource set in the resource block set group and a sub-channel corresponding to a PSFCH resource in the resource block set group are determined.

In the embodiment of the present application, for each resource block set group in a resource pool, the PSFCH resource set in each resource block set group and the sub-channel corresponding to the PSFCH resource in the PSFCH resource set in each resource block set group may be determined.

In some embodiments of the present application, the method for determining the PSFCH resource set in each resource block set group of the resource pool may include providing frequency-domain PSFCH resources in the resource block set group through configuration or pre-configuration. The PSFCH resource set in the resource block set group consists of frequency-domain PSFCH resources in the resource block set group which are provided through configuration, pre-configuration, or predefinition; or frequency-domain PSFCH resources in the resource block set group which are provided through configuration, pre-configuration, or predefinition and code-domain PSFCH resources configured, pre-configured, or predefined in the resource pool. Exemplarily, the case where the frequency-domain PSFCH resources in each resource block set group of the resource pool are determined is used as an example. For each resource block set group, a bitmap may be used to indicate the PSFCH resources in a resource block set group. That is, different bitmaps may indicate PSFCH resources in different resource block set groups. Alternatively, a single bitmap indicates PSFCH resources in the entire resource pool so that a PSFCH resource located in a resource block set group is determined as the PSFCH resource of the resource block set group. In the embodiments of the present application, each PSFCH resource occupies at least one resource block.

In other embodiments of the present application, each resource block indicated by the bitmap is a PSFCH resource. In other embodiments of the present application, a specific number of adjacent resource blocks in the resource blocks indicated by the bitmap may be used as a PSFCH resource, or a specific number of resource blocks with a specific interval in the resource blocks indicated by the bitmap may be used as a PSFCH resource, where the specific number, specific interval, and other information are determined by configuration, pre-configuration, or pre-definition.

In some embodiments of the present application, one or more interlace indices may be used to indicate PSFCH resources in each resource block set group of the resource pool. Alternatively, one or more interlace indices are used to indicate PSFCH resources in the resource pool so that PSFCH resources located in a resource block set group are determined as the PSFCH resources of the resource block set group. A PSFCH resource may be at least one of the following: each resource block in each interlace; a specific number of adjacent resource blocks in each interlace; a specific number of resource blocks with specific intervals in each interlace; and each interlace. The specific number, specific interval, and other information are determined by configuration, pre-configuration, or pre-definition.

In some embodiments of the present application, for each resource block set group in the resource pool, determining the sub-channel corresponding to the PSFCH resource in each resource block set group is equivalent to determining which sub-channels the PSFCH resources in each resource block set group may be allocated to. The above may also be understood as follows: For the PSFCH resource set in the resource block set group, it is determined which sub-channels the PSFCH resources in the PSFCH resource set are allocated to. The determination method may include configuration, pre-configuration, or pre-definition. In some embodiments of the present application, it may be determined, through configuration, pre-configuration, or pre-definition, which resource block set groups have the PSFCH resources corresponding to each sub-channel in the resource pool. In other words, for each sub-channel, it is determined which PSFCH resources in the resource block set groups may be allocated to the sub-channel, thereby determining the sub-channels corresponding to the PSFCH resources in each resource block set group in the resource pool, that is, determining which sub-channels the PSFCH resources in each resource block set group may be allocated to. In other embodiments of the present application, the resource block sets contained in the resource pool may be grouped. For each resource block set group (that is, each group of resource block sets), each sub-channel in the resource block set group has corresponding PSFCH resources in the resource block set group. Thus, it is determined which sub-channels the PSFCH resources in each resource block set group may be allocated to. In some other embodiments of the present application, the resource block sets included in the resource pool may be grouped. Each sub-channel in each resource block set group (that is, each group of resource block sets) has corresponding PSFCH resources in the resource block set group and also has corresponding PSFCH resources in at least one other resource block set group. Thus, it is determined which sub-channels the PSFCH resources in each resource block set group may be allocated to.

In S220, for each resource block set group, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

In the embodiment of the present application, for each resource block set group in the resource pool, the PSFCH resources in the PSFCH resource set over the PSFCH slot may be grouped based on the number of sub-channels and the number or maximum number of PSSCH slots associated with the PSFCH slot, and the divided PSFCH resource groups are allocated to each PSSCH slot associated with the PSFCH slot and each sub-channel in the sub-channels corresponding to the PSFCH resources in the resource block set group determined in S210.

Based on the embodiments of the present application, a sub-channel has corresponding PSFCH resources in each resource block set group in at least one resource block set group.

A sub-channel may correspond to PSFCH resources in multiple resource block set groups. In other words, a PSFCH resource group from the PSFCH resource set of each resource block set group in the at least one resource block set group is allocated to the sub-channel.

In some embodiments of the present application, part of the sub-channels in the resource pool have corresponding PSFCH resources in each resource block set group of at least one resource block set group, while the other part of the sub-channels in the resource pool have corresponding PSFCH resources in each resource block set group of at least two resource block set groups.

In other embodiments of the present application, all sub-channels in the resource pool have corresponding PSFCH resources in each resource block set group of at least two resource block set groups.

In other embodiments of the present application, each sub-channel in the resource pool has a corresponding PSFCH resource in each RB set group of M RB set groups.

The PSFCH resource set in each RB set group of the resource pool is divided into M subsets, and each sub-channel corresponds to different PSFCH resource subsets in the M RB set groups.

The PSFCH resources in a PSFCH resource subset of each RB set group are allocated to each PSSCH slot in the PSSCH slots associated with the PSFCH slot and to each sub-channel corresponding to the PSFCH resource subset. In other words, the PSFCH resources in the PSFCH resource subset of each RB set group are allocated to each sub-channel over each PSSCH slot of the PSSCH slots associated with the PSFCH slot.

For example, a resource pool contains three RB sets that are divided into M (M = 2) RB set groups. RB set 1 and RB set 2 form the first RB set group, and RB set 3 forms the second RB set group. One PSFCH slot is associated with four PSSCH slots. The sub-channels in the first RB set group have corresponding PSFCH resources in both the first RB set group and the second RB set group, and the sub-channels in the second RB set group also have corresponding PSFCH resources in both the first RB set group and the second RB set group. The PSFCH resource set in each RB set group is divided into 2 subsets. It is assumed that the sub-channels in the first RB set group correspond to the first PSFCH resource subset in the first RB set group and the second PSFCH resource subset in the second RB set group, and the sub-channels in the second RB set group correspond to the first PSFCH resource subset in the second RB set group and the second PSFCH resource subset in the first RB set group. Thus, the PSFCH resources in the first and second PSFCH resource subsets of the first RB set group are allocated to the sub-channels in the first RB set group and the sub-channels in the second RB set group across the four PSSCH slots associated with the PSFCH slot, and the PSFCH resources in the first and second PSFCH resource subsets of the second RB set group are allocated to the sub-channels in the second RB set group and the sub-channels in the first RB set group across the four PSSCH slots associated with the PSFCH slot.

In some embodiments of the present application, determining the sub-channel corresponding to the PSFCH resource in the resource block set group includes at least one of the following: determining the sub-channel corresponding to the PSFCH resource in the resource block set group through at least one of configuration, pre-configuration, or pre-definition; using the sub-channels in the resource block set group as the sub-channel corresponding to the PSFCH resource in the resource block set group; and using sub-channels in at least one resource block set group as the sub-channel corresponding to the PSFCH resource in the resource block set group.

In some embodiments of the present application, the sub-channel has corresponding PSFCH resources in each resource block set group of at least one resource block set group.

In some embodiments of the present application, the PSFCH resources in the PSFCH resource set include frequency-domain PSFCH resources and code-domain PSFCH resources, and a PSFCH resource corresponding to a PSSCH includes a PSFCH resource allocated to a starting sub-channel occupied by the PSSCH or a PSFCH resource allocated to each sub-channel among all sub-channels occupied by the PSSCH.

In some embodiments of the present application, the PSFCH resources in the PSFCH resource set are frequency-domain PSFCH resources, and a PSFCH resource corresponding to the PSSCH includes at least one of the following: a PSFCH resource allocated to the starting sub-channel occupied by the PSSCH and a code-domain PSFCH resource; PSFCH resources allocated to all sub-channels occupied by the PSSCH and a code-domain PSFCH resource; a PSFCH resource allocated to the starting sub-channel occupied by the PSSCH; and PSFCH resources allocated to all sub-channels occupied by the PSSCH.

In an embodiment of the present application, the PSFCH resources in the PSFCH resource set are frequency-domain PSFCH resources and code-domain PSFCH resources. For each resource block set group in the resource pool, the PSFCH resource corresponding to the PSSCH in a resource block set group is the PSFCH resource allocated to the starting sub-channel occupied by the PSSCH in the resource block set group, or the PSFCH resource corresponding to the PSSCH in a resource block set group is the PSFCH resource allocated to the sub-channel corresponding to the PSFCH resource in the resource block set group among all sub-channels occupied by the PSSCH.

In another embodiment of the present application, the PSFCH resources in the PSFCH resource set are frequency-domain PSFCH resources. For each resource block set group in the resource pool, the PSFCH resource corresponding to the PSSCH in a resource block set group includes at least one of the following: a PSFCH resource allocated to the starting sub-channel occupied by the PSSCH in the resource block set group and a code-domain PSFCH resource; PSFCH resources allocated to the sub-channels corresponding to the PSFCH resources in the resource block set group among all sub-channels occupied by the PSSCH and a code-domain PSFCH resource; a PSFCH resource allocated to the starting sub-channel occupied by the PSSCH in the resource block set group; and PSFCH resources allocated to the sub-channels corresponding to the PSFCH resources in the resource block set group among all sub-channels occupied by the PSSCH.

In some embodiments of the present application, for each resource block set group in the resource pool or each resource block set group in partial resource block set groups of the resource pool, T PSFCH resources in the resource block set group are determined, and each sub-channel corresponds to different PSFCH resource sets over different PSFCH slots, where T is an integer.

In an example embodiment, the sub-channel corresponds to PSFCH resources in at least one resource block set group over each slot of the T PSFCH slots.

In the embodiment of the present application, the PSFCH may carry HARQ feedback information, reserved resource collision indication information, and other information such as COT information. A process of configuring information or a parameter may refer to the process by which a network or a base station configures the information or the parameter for the UE, and a process of pre-configuring information or a parameter may refer to the process by which other higher-layer entities, such as a higher layer of the UE or other network entities, configure the information or the parameter for the UE. Additionally, the association between a PSSCH slot and a PSFCH slot, or the association between a PSSCH slot and the PSFCH slot corresponding to the PSSCH slot may be understood as the time-domain correspondence between the slot where the PSSCH is located and the slot where the PSFCH corresponding to the PSSCH is located. The association between a PSSCH slot and T PSFCH slots may be understood as the time-domain correspondence between the slot where the PSSCH is located and the T slots where T PSFCHs corresponding to the PSSCH are located.

FIG. 10 is a diagram illustrating the structure of a feedback channel mapping apparatus according to an embodiment of the present application. The apparatus may perform the feedback channel mapping method according to any embodiment of the present application and has the functional modules and beneficial effects corresponding to the applied method. The apparatus may be implemented by software and/or hardware and is generally integrated in a user terminal, a base station, or a network-side device. The feedback channel mapping apparatus includes a first determination module 301 and a first resource allocation module 302.

The first determination module 301 is configured to, for each resource block set in a resource pool, determine a PSFCH resource set in the resource block set and a sub-channel corresponding to a PSFCH resource in the resource block set.

The first resource allocation module 302 is configured to, for each resource block set, group PSFCH resources in the PSFCH resource set based on the number of sub-channels corresponding to the PSFCH resources in the PSFCH resource set and the number or maximum number of PSSCH slots associated with a PSFCH slot, and allocate divided PSFCH resource groups to each PSSCH slot in the PSSCH slots associated with the PSFCH slot and to each sub-channel in the sub-channels.

In some embodiments of the present application, the first determination module 301 is configured to perform at least one of the following: determining the sub-channel corresponding to the PSFCH resource in the resource block set through at least one of configuration, pre-configuration, or pre-definition; or determining a resource block set group in the resource pool, and using all sub-channels in the resource block set group containing the resource block set as the sub-channel corresponding to the PSFCH resource in the resource block set.

In some embodiments of the present application, the sub-channel in the apparatus has corresponding PSFCH resources in each resource block set of at least one resource block set.

In some other embodiments of the present application, the PSFCH resources in the PSFCH resource set in the apparatus include frequency-domain PSFCH resources and code-domain PSFCH resources, and a PSFCH resource corresponding to a PSSCH includes a PSFCH resource allocated to a starting sub-channel occupied by the PSSCH or a PSFCH resource allocated to each sub-channel among all sub-channels occupied by the PSSCH.

In some other embodiments of the present application, the PSFCH resources in the PSFCH resource set in the apparatus are frequency-domain PSFCH resources, and the PSFCH resources corresponding to a PSSCH include at least one of the following: a PSFCH resource allocated to the starting sub-channel occupied by the PSSCH and a code-domain PSFCH resource; PSFCH resources allocated to all sub-channels occupied by the PSSCH and the code-domain PSFCH resource; the PSFCH resource allocated to the starting sub-channel occupied by the PSSCH; and the PSFCH resources allocated to all sub-channels occupied by the PSSCH.

In some embodiments of the present application, for each resource block set in the resource pool or each resource block set in part of the resource block sets of the resource pool in the apparatus, T PSFCH resource sets in the resource block set are determined, and each sub-channel corresponds to different PSFCH resource sets over different PSFCH slots, where T is a positive integer.

In some embodiments of the present application, the sub-channel corresponds to PSFCH resources in at least one resource block set over each slot of the T PSFCH slots.

In some embodiments of the present application, the apparatus includes a first grouping module configured to group PSFCH slots in the resource pool, and each sub-channel corresponds to at least one PSFCH resource over one PSFCH slot in each PSFCH slot group.

In some embodiments of the present application, the sub-channel in the apparatus corresponds to a PSFCH resource in at least one resource block set over one slot in each PSFCH slot group.

In some embodiments of the present application, the apparatus includes a second grouping module configured to group PSFCH slots in the resource pool, and each sub-channel corresponds to at least one PSFCH resource over each PSFCH slot in a PSFCH slot group.

In some embodiments of the present application, the sub-channel corresponds to at least one PSFCH resource in at least one resource block set over each PSFCH slot of the PSFCH slot group.

FIG. 11 is a diagram illustrating the structure of another feedback channel mapping apparatus according to an embodiment of the present application. The apparatus may perform the feedback channel mapping method according to any embodiment of the present application and has the functional modules and beneficial effects corresponding to the applied method. The apparatus may be implemented by software and/or hardware and is generally integrated in a user terminal, a base station, or a network-side device. The feedback channel mapping apparatus includes a second determination module 401 and a second resource allocation module 402.

The second determination module 401 is configured to, for each resource block set group in a resource pool, determine a PSFCH resource set in the resource block set group and a sub-channel corresponding to a PSFCH resource in the resource block set group.

The second resource allocation module 402 is configured to, for each resource block set group, group PSFCH resources in the PSFCH resource set based on the number of sub-channels corresponding to the PSFCH resources in the PSFCH resource set and the number or maximum number of PSSCH slots associated with a PSFCH slot, and allocate divided PSFCH resource groups to each PSSCH slot in the PSSCH slots associated with the PSFCH slot and to each sub-channel in the sub-channels.

Based on the embodiments of the present application, the second determination module 401 is configured to perform at least one of the following: determining the sub-channel corresponding to the PSFCH resource in the resource block set group through at least one of configuration, pre-configuration, or pre-definition; using sub-channels in the resource block set group as the sub-channel corresponding to the PSFCH resource in the resource block set group; and using sub-channels in at least one resource block set group as the sub-channel corresponding to the PSFCH resource in the resource block set group.

In some embodiments of the present application,

tion, the sub-channel in the apparatus has corresponding PSFCH resources in each resource block set group of at least one resource block set group.

In some embodiments of the present application, the PSFCH resources in the PSFCH resource set in the apparatus include frequency-domain PSFCH resources and code-domain PSFCH resources, and a PSFCH resource corresponding to a PSSCH includes a PSFCH resource allocated to a starting sub-channel occupied by the PSSCH or a PSFCH resource allocated to each sub-channel among all sub-channels occupied by the PSSCH.

In some embodiments of the present application, the PSFCH resources in the PSFCH resource set in the apparatus are frequency-domain PSFCH resources, and the PSFCH resource corresponding to the PSSCH includes at least one of the following: a PSFCH resource allocated to the starting sub-channel occupied by the PSSCH and a code-domain PSFCH resource; PSFCH resources allocated to all sub-channels occupied by the PSSCH and the code-domain PSFCH resource; the PSFCH resource allocated to the starting sub-channel occupied by the PSSCH; and the PSFCH resources allocated to all sub-channels occupied by the PSSCH.

FIG. 12 is a diagram illustrating the structure of an electronic device according to an embodiment of the present application. The electronic device includes a processor 30, a memory 31, an input apparatus 32 and an output apparatus 33. One or more processors 30 may be provided in the electronic device. One processor 30 is used as an example in FIG. 12. The processor 30, the memory 31, the input apparatus 32 and the output apparatus 33 in the electronic device may be connected through a bus or in other manners. In FIG. 12, connection through a bus is used as an example.

As a computer-readable storage medium, the memory 31 may be configured to store software programs, computer-executable programs, and modules, such as modules (the first determination module 301 and the first resource allocation module 302, or the second determination module 401 and the second resource allocation module 402) corresponding to the network optimization apparatus in the embodiments of the present application. The processor 30 executes software programs, instructions, and modules stored in the memory 31 to perform function applications and data processing of the device, that is, to implement the preceding feedback channel mapping method.

The memory 31 may mainly include a program storage region and a data storage region. The program storage region may store an operating system and an application program required by at least one function. The data storage region may store data created based on the use of the electronic device. In addition, the memory 31 may include a high-speed random-access memory and a nonvolatile memory, such as at least one disk memory, a flash memory, or other nonvolatile solid-state memories. In some examples, the memory 31 may include memories which are remotely disposed relative to the processor 30 and these remote memories may be connected to the electronic device via a network. Examples of the preceding network include but are not limited to, the Internet, an intranet, a local area network, a mobile communication network, and a combination thereof.

The input apparatus 32 may be configured to receive inputted digital or character information and generate key signal input related to user settings and function control of the electronic device. The output apparatus 33 may include a display screen and other display devices.

An embodiment of the present application also provides a storage medium including computer-executable instructions, and the computer-executable instructions are used for performing a feedback channel mapping method when executed by a computer processor. The method includes the following the operations described below.

For each resource block set in a resource pool, a PSFCH resource set in the resource block set and a sub-channel corresponding to a PSFCH resource in the resource block set are determined. For each resource block set, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

Alternatively, for each resource block set group in a resource pool, a PSFCH resource set in the resource block set group and a sub-channel corresponding to a PSFCH resource in each resource block set group are determined. For each resource block set group, PSFCH resources in the PSFCH resource set are grouped based on the number of sub-channels corresponding to the PSFCH resources in the PSFCH resource set and the number or maximum number of PSSCH slots associated with a PSFCH slot, and divided PSFCH resource groups are allocated to each PSSCH slot in the PSSCH slots associated with the PSFCH slot and to each sub-channel in the sub-channels.

From the preceding description of the embodiments, it is apparent to those skilled in the art that the present application may be implemented by use of software and necessary general-purpose hardware or may be implemented by hardware, but in many cases the former is a preferred embodiment. Based on this understanding, the technical solutions of the present application may be essentially embodied in the form of a software product. The software product in a computer may be stored in a computer-readable storage medium such as a floppy disk, a read-only memory (ROM), a random-access memory (RAM), a flash memory, a hard disk, or an optical disc in the computer and includes several instructions for enabling a computer device (which may be a personal computer, a server, or a network device) to perform the methods of the embodiments of the present application.

Units and modules included in the embodiments of the preceding apparatuses are just divided according to functional logic. The present application is not limited to this division as long as the corresponding functions can be implemented. Additionally, the names of function units are just used to distinguish between each other and are not intended to limit the scope of the present application.

It is to be understood by those of ordinary skill in the art that some or all operations of the preceding methods and function modules/units in the preceding system or device may be implemented as software, firmware, hardware, and suitable combinations thereof.

In the hardware embodiments, the division of the preceding function modules/units may not correspond to the division of physical components. For example, one physical component may have multiple functions, or one function or operation may be performed jointly by several physical components. Some or all physical components may be implemented as software executed by a processor, such as a central processing unit, a digital signal processor, or a microprocessor, may be implemented as hardware, or may be implemented as integrated circuits, such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory, or other memory technologies, a compact disc read-only memory (CD-ROM), a digital video disc (DVD) or other optical disk memories, a magnetic cassette, a magnetic tape, a magnetic disk memory or other magnetic storage apparatuses, or any other medium used for storing the desired information and accessible by a computer. Moreover, as known to those of ordinary skill in the art, the communication media generally include computer-readable instructions, data structures, program modules, or other data in a modulated data signal such as a carrier wave or other transport mechanism and may include any information delivery medium.

**Claims**

1. A feedback channel mapping method, comprising:

   for each resource block set in a resource pool, determining a physical sidelink feedback channel, PSFCH, resource set in the resource block set, and determining a sub-channel corresponding to a PSFCH resource in the resource block set; and

for each resource block set in the resource pool, grouping PSFCH resources in the PSFCH resource set based on a number of sub-channels corresponding to the PSFCH resources in the PSFCH resource set, and a number of physical sidelink shared channel, PSSCH, slots associated with a PSFCH slot or a maximum number of PSSCH slots associated with a PSFCH slot, and allocating divided PSFCH resource groups to each PSSCH slot in the PSSCH slots associated with the PSFCH slot and to each sub-channel in the sub-channels.

2. The feedback channel mapping method according to claim 1, wherein determining the sub-channel corresponding to the PSFCH resource in the resource block set comprises at least one of:

determining the sub-channel corresponding to the PSFCH resource in the resource block set through at least one of configuration, pre-configuration, or pre-definition; or determining a resource block set group in the resource pool, and using all sub-channels in the resource block set group containing the resource block set as the sub-channel corresponding to the PSFCH resource in the resource block set.

3. The feedback channel mapping method according to claim 2, wherein the sub-channel has a corresponding PSFCH resource in each resource block set of at least one resource block set.

4. The feedback channel mapping method according to claim 1, wherein the PSFCH resources in the PSFCH resource set comprise a frequency-domain PSFCH resource and a code-domain PSFCH resource, and a PSFCH resource corresponding to a PSSCH comprises a PSFCH resource allocated to a starting sub-channel occupied by the PSSCH or a PSFCH resource allocated to each sub-channel among all sub-channels occupied by the PSSCH.

5. The feedback channel mapping method according to claim 1, wherein the PSFCH resources in the PSFCH resource set are frequency-domain PSFCH resources, and a PSFCH resource corresponding to a PSSCH comprises at least one of:

a PSFCH resource allocated to a starting sub-channel occupied by the PSSCH and a code-domain PSFCH resource;

PSFCH resources allocated to all sub-channels occupied by the PSSCH and a code-domain PSFCH resource;

a PSFCH resource allocated to a starting sub-channel occupied by the PSSCH; or

PSFCH resources allocated to all sub-channels occupied by the PSSCH.

6. The feedback channel mapping method according to claim 1, comprising:

for each resource block set in the resource pool or each resource block set in part of resource block sets of the resource pool, determining T PSFCH resource sets in the resource block set, wherein each sub-channel corresponds to different PSFCH resource sets over different PSFCH slots, and T is a positive integer.

7. The feedback channel mapping method according to claim 6, wherein each sub-channel corresponds to PSFCH resources in at least one resource block set over each PSFCH slot among the T PSFCH slots.

8. The feedback channel mapping method according to claim 1, comprising: grouping PSFCH slots in the resource pool, wherein each sub-channel corresponds to at least one PSFCH resource over a PSFCH slot in each PSFCH slot group.

9. The feedback channel mapping method according to claim 8, wherein each sub-channel corresponds to at least one PSFCH resource in at least one resource block set over the PSFCH slot in each PSFCH slot group.

10. The feedback channel mapping method according to claim 1, comprising: grouping PSFCH slots in the resource pool, wherein each sub-channel corresponds to at least one PSFCH resource over each PSFCH slot in a PSFCH slot group.

11. The feedback channel mapping method according to claim 10, wherein each sub-channel corresponds to at least one PSFCH resource in at least one resource block set over each PSFCH slot in the PSFCH slot group.

12. A feedback channel mapping method, comprising:

for each resource block set group in a resource pool, determining a physical sidelink feedback channel, PSFCH, resource set in the resource block set group, and determining a sub-channel corresponding to a PSFCH resource in the resource block set group; and

for each resource block set group in the resource pool, grouping PSFCH resources in the PSFCH resource set based on a number of sub-channels corresponding to the PSFCH resources in the PSFCH resource set and a number of physical sidelink shared channel, PSSCH, slots associated with a PSFCH slot or a maximum number of PSSCH slots associated with a PSFCH slot, and allocating divided PSFCH resource groups to each PSSCH slot in the PSSCH slots associated with the PSFCH slot and to each sub-channel in the sub-channels.

13. An electronic device, comprising:

at least one processor and
a memory configured to store at least one program,
wherein the at least one program, when executed by the at least one processor, causes the at least one processor to implement the feedback channel mapping method of any one of claims 1 to 11 or 12.

14. A computer-readable storage medium storing at least one program, wherein the at least one program is executable by at least one processor, to perform the feedback channel mapping method of any one of claims 1 to 11 or 12.

For each resource block set in a resource pool, determine a PSFCH resource set in the resource block set and a sub-channel corresponding to a PSFCH resource in the resource block set ～S110

For each resource block set, group PSFCH resources in the PSFCH resource set based on the number of sub-channels and the number or maximum number of PSSCH slots associated with a PSFCH slot, and allocate divided PSFCH resource groups to each PSSCH slot in the PSSCH slots associated with the PSFCH slot and to each sub-channel in the sub-channels ～S120

## FIG. 1

FIG. 2

FIG. 3

FIG. 4

First PSFCH resource set     Second PSFCH resource set

FIG. 5

**FIG. 6**

First PSFCH resource set     Second PSFCH resource set

First PSFCH slot group

Second PSFCH slot group

**FIG. 7**

First PSFCH slot group    Second PSFCH slot group    Third PSFCH slot group    Fourth PSFCH slot group

**FIG. 8**

For each resource block set group in a resource pool, determine a PSFCH resource set in the resource block set group and a sub-channel corresponding to a PSFCH resource in the resource block set group ⟩ S210

For each resource block set group, group PSFCH resources in the PSFCH resource set based on the number of sub-channels and the number or maximum number of PSSCH slots associated with a PSFCH slot, and allocate divided PSFCH resource groups to each PSSCH slot in the PSSCH slots associated with the PSFCH slot and to each sub-channel in the sub-channels ⟩ S220

**FIG. 9**

301

302

| First determination module | First resource allocation module |

**FIG. 10**

401

402

| Second determination module | Second resource allocation module |

**FIG. 11**

Memory — 31

Input apparatus — 32

Output apparatus — 33

Processor — 30

**FIG. 12**

## INTERNATIONAL SEARCH REPORT

| International application No. |
| --- |
| **PCT/CN2024/071342** |

### A.  CLASSIFICATION OF SUBJECT MATTER

H04W72/0446(2023.01)i

According to International Patent Classification (IPC) or to both national classification and IPC

### B.  FIELDS SEARCHED

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 物理边链路反馈信道, 旁链路反馈信道, 侧链路反馈信道, 物理边链路共享信道, 旁链路共享信道, 侧链路共享信道, 资源块, 资源块集, 资源块集组, 资源组, 子信道, 时隙, 数量, 个数, 分组, 频域, 码域, PSFCH, PSSCH, sidelink, RL, resource block, RB, RB set, group, subchannel, slot, number

### C.  DOCUMENTS CONSIDERED TO BE RELEVANT

| Category* | Citation of document, with indication, where appropriate, of the relevant passages | Relevant to claim No. |
| --- | --- | --- |
| X | CN 112840584 A (GUANGDONG OPPO MOBILE COMMUNICATIONS CO., LTD.) 25 May 2021 (2021-05-25)<br>　　description, paragraphs 0031-0032, 0036-0060, 0092, 0094, 0097, and 0102 | 1-14 |
| X | US 2022094472 A1 (LG ELECTRONICS INC.) 24 March 2022 (2022-03-24)<br>　　description, paragraphs 0114, 0150-0181, 0246, and 0260-0261, and figures 15-19 | 1-14 |
| X | WO 2022073186 A1 (QUALCOMM INC.) 14 April 2022 (2022-04-14)<br>　　description, paragraphs 0050-074 and 0160-0171 | 1-14 |
| X | CAICT. "On PSFCH of NR Sidelink"<br>*3GPP TSG RAN WG1 #100-e, R1-2001045*, 06 March 2020 (2020-03-06),<br>　　sections 2-3 | 1-14 |
| A | US 2022232530 A1 (OFINNO, LLC) 21 July 2022 (2022-07-21)<br>　　entire document | 1-14 |
| A | US 2021288778 A1 (INNOVATIVE TECHNOLOGY LAB CO., LTD.) 16 September 2021 (2021-09-16)<br>　　entire document | 1-14 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 March 2024** | **01 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071342**

| Patent document cited in search report | | | Publication date (day/month/year) | Patent family member(s) | | | Publication date (day/month/year) |
|---|---|---|---|---|---|---|---|
| CN | 112840584 | A | 25 May 2021 | BR | 112022001019 | A2 | 12 April 2022 |
| | | | | AU | 2020335057 | A1 | 03 February 2022 |
| | | | | EP | 3970296 | A1 | 23 March 2022 |
| | | | | WO | 2021037235 | A1 | 04 March 2021 |
| | | | | JP | 2022545854 | A | 01 November 2022 |
| | | | | EP | 4254850 | A2 | 04 October 2023 |
| | | | | US | 2022110097 | A1 | 07 April 2022 |
| | | | | KR | 20220054246 | A | 02 May 2022 |
| | | | | CN | 113315615 | A | 27 August 2021 |
| | | | | VN | 86244 | A | 25 May 2022 |
| | | | | IN | 202117059888 | A | 24 June 2022 |
| US | 2022094472 | A1 | 24 March 2022 | EP | 3965353 | A1 | 09 March 2022 |
| | | | | WO | 2021006499 | A1 | 14 January 2021 |
| | | | | KR | 20210149866 | A | 09 December 2021 |
| | | | | KR | 20220056250 | A | 04 May 2022 |
| | | | | US | 2023052408 | A1 | 16 February 2023 |
| | | | | JP | 2022539882 | A | 13 September 2022 |
| | | | | CN | 114080770 | A | 22 February 2022 |
| WO | 2022073186 | A1 | 14 April 2022 | US | 2023309117 | A1 | 28 September 2023 |
| | | | | EP | 4226704 | A1 | 16 August 2023 |
| | | | | IN | 202347007724 | A | 10 February 2023 |
| | | | | CN | 116326002 | A | 23 June 2023 |
| US | 2022232530 | A1 | 21 July 2022 | EP | 4029330 | A1 | 20 July 2022 |
| | | | | KR | 20230048478 | A | 11 April 2023 |
| | | | | JP | 2023536378 | A | 25 August 2023 |
| | | | | US | 2023199723 | A1 | 22 June 2023 |
| | | | | EP | 4185034 | A1 | 24 May 2023 |
| | | | | WO | 2022035706 | A1 | 17 February 2022 |
| | | | | CN | 115486159 | A | 16 December 2022 |
| US | 2021288778 | A1 | 16 September 2021 | KR | 20200050848 | A | 12 May 2020 |
| | | | | EP | 3876460 | A1 | 08 September 2021 |
| | | | | WO | 2020091492 | A1 | 07 May 2020 |
| | | | | CN | 112930658 | A | 08 June 2021 |
| | | | | VN | 79682 | A | 26 July 2021 |
| | | | | IN | 202117024280 | A | 05 November 2021 |

Form PCT/ISA/210 (patent family annex) (July 2022)